# EUROPEAN PATENT APPLICATION

(11) **EP 3 136 309 A1**
(43) Date of publication of application: **01.03.2017**
(21) Application number: 16185973.1
(22) Date of filing: 26.08.2016
(51) Int. Cl.: G06Q 10/00, G06Q 10/06

(54) **PAYMENT INFORMATION PROCESSING METHOD AND APPARATUS OF ELECTRONIC DEVICE**

(30) Priority: 28.08.2015 US 201562211189 P; 28.12.2015 KR 20150187618
(71) Applicant: Samsung Electronics Co., Ltd., Suwon-si, Gyeonggi-do 16677 (KR)
(72) Inventor: KIM, Kyungduk, 16677 Gyeonggi-do (KR); KIM, Kyungdong, 16677 Gyeonggi-do (KR)
(74) Representative: Jenkins, Richard Gavin

(57) **Abstract**

An electronic device is provided. The electronic device includes a sensor, a communication interface, and a processor configured to acquire location information of the electronic device using the sensor, transmit a request for payment means information and the location information to a first external device using the communication interface, the payment means information being received by the first external device and generated by the first external device based on the transmitted location information, and transmit the payment means information to a second external device for use in payment using the communication interface.

## Description

### TECHNICAL FIELD

The present disclosure relates to a payment information processing method and apparatus of an electronic device.

### BACKGROUND

A user may register a previously issued plastic card information with an electronic device. A one-time card number is issued by a server of a card company in response to a user request. The one-time card number includes the same bank identification number (BIN) as the previously issued plastic card information.

The above information is presented as background information only to assist with an understanding of the present disclosure. No determination has been made, and no assertion is made, as to whether any of the above might be applicable as prior art with regard to the present disclosure.

### SUMMARY

Conventionally, only a card registered with the electronic device based on the previously issued plastic card information can be used for payment.

Aspects of the present disclosure are to address at least the above-mentioned problems and/or disadvantages and to provide at least the advantages described below. Accordingly, an aspect of the present disclosure is to provide a one-time payment information processing method and apparatus for electronic devices to enable the issue of a card that can be used only one time.

In accordance with an aspect of the present disclosure, an electronic device is provided. The electronic device includes a sensor, a communication interface, and a processor configured to acquire location information of the electronic device using the sensor, transmit a request for payment means information and the location information to a first external device using the communication interface, the payment means information being received by the first external device and generated by the first external device based on the transmitted location information, and transmit the payment means information to a second external device for use in payment using the communication interface.

In accordance with another aspect of the present disclosure, an electronic device is provided. The electronic device includes a communication interface and a processor configured to receive, from an external device, location information acquired using a sensor that is functionally connected to the external device and a payment means request using the communication interface, generate payment means information based on the received location information, and transmit the payment means information to the external device for use in payment using the communication interface.

In accordance with another aspect of the present disclosure, a payment information processing method of an electronic device is provided. The payment information processing method includes acquiring location information of the electronic device using a sensor, transmitting a request for payment means information and the location information using a communication interface, receiving the payment means information from a first external device, the payment means information being generated by the first external device based on the transmitted location information, and transmitting the payment means information for use in payment to a second external device using the communication interface.

In accordance with another aspect of the present disclosure, an electronic device is provided. The electronic device includes a sensor, a communication interface, and a processor configured to acquire location information of the electronic device using the sensor, determine payment means information required according to the location information, transmit a request for the payment means information using the communication interface, receive the payment means information from a first external device, and transmit the payment means information to a second external device for use in payment.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of an electronic device in a network environment according to various embodiments of the present disclosure;
FIG. 2 is a block diagram illustrating a configuration of an electronic device according to various embodiments of the present disclosure;
FIG. 3 is a block diagram illustrating a configuration of a program module according to various embodiments of the present disclosure;
FIG. 4 is a block diagram illustrating a rich execution environment (REE) and trusted execution environment (TEE) of an electronic device according to various embodiments of the present disclosure;
FIGS. 5A to 5C are block diagrams illustrating hardware structures of a TEE according to various embodiments of the present disclosure;
FIG. 6 is a diagram illustrating a payment system according to various embodiments of the present disclosure;
FIG. 7 is a diagram illustrating a payment system for supporting payment transaction according to various embodiments of the present disclosure;
FIG. 8 is a block diagram illustrating a hardware configuration of the electronic device capable of performing the payment function according to various embodiments of the present disclosure;
FIG. 9 is a block diagram illustrating program modules running in an execution environment of the electronic device having a payment function according to various embodiments of the present disclosure;
FIGS. 10A to 10C are diagrams illustrating token issuance operations of the electronic device according to various embodiments of the present disclosure;
FIG. 11 is a diagram illustrating a token-based payment system according to various embodiments of the present disclosure;
FIGS. 12A and 12B are a signal flow diagram illustrating a payment information processing and payment transaction procedure according to various embodiments of the present disclosure;
FIG. 13A is a flowchart illustrating payment information processing and payment procedure according to an embodiment of the present disclosure;
FIG. 13B is a flowchart illustrating payment information processing and payment procedure according to an embodiment of the present disclosure;
FIG. 13C is a flowchart illustrating payment information processing and payment procedure according to an embodiment of the present disclosure;
FIG. 14 is a diagram illustrating a structure of a token or one-time card (OTC) according to various embodiments of the present disclosure;
FIG. 15 is a diagram illustrating a structure of an OTC according to various embodiments of the present disclosure;
FIG. 16 is a diagram illustrating configurations of the electronic device and a token server according to various embodiments of the present disclosure;
FIG. 17 is a diagram illustrating a user interface for presenting a token or a one-time card according to various embodiments of the present disclosure; and
FIGS. 18A to 18H are diagrams for explaining the configuration of the token or OTC according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

In various embodiments of the present disclosure, the expression "or" or "at least one of A and/or B" includes any or all of combinations of words listed together. For example, the expression "A or B" or "at least A and/or B" may include A, may include B, or may include both A and B.

The expression "1," "2," "first," or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a communication function. For example, the electronic device may be one or a combination of a smart phone, a tablet personal computer (PC), a mobile phone, a video phone, an e-book reader, a desktop PC, a laptop PC, a netbook computer, a personal digital assistant (PDA), a camera, a wearable device (for example, a head-mounted-device (HMD) such as electronic glasses, electronic clothes, and electronic bracelet, an electronic necklace, an electronic appcessory, an electronic tattoo, and a smart watch.

According to some embodiments, the electronic device may be a smart home appliance having a communication function. The smart home appliance may include at least one of a television (TV), a digital versatile Disc (DVD) player, an audio player, an air conditioner, a cleaner, an oven, a microwave oven, a washing machine, an air cleaner, a set-top box, a TV box (for example, Samsung HomeSync™, Apple TV™, or Google TV™), game consoles, an electronic dictionary, an electronic key, a camcorder, and an electronic frame.

According to some embodiments, the electronic device may include at least one of various types of medical devices (for example, magnetic resonance angiography (MRA), magnetic resonance imaging (MRI), computed tomography (CT), a scanner, an ultrasonic device and the like), a navigation device, a global positioning system (GPS) receiver, an event data recorder (EDR), a flight data recorder (FDR), a vehicle infotainment device, electronic equipment for a ship (for example, a navigation device for ship, a gyro compass and the like), avionics, a security device, a head unit for a vehicle, an industrial or home robot, an automatic teller machine (ATM) of financial institutions, and a point of sale (POS) device of shops.

According to some embodiments, the electronic device may include at least one of furniture or a part of a building/structure, an electronic board, an electronic signature receiving device, a projector, and various types of measuring devices (for example, a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (for example, an artificial intelligence electronic device) which uses an electronic device.

According to one embodiment of the present disclosure, a screen of an electronic device may be split into at least two windows according to a predefined split manner and displayed through a display of an electronic device. The windows are defined as split windows. According to one embodiment, the split windows are defined as windows displayed on a display of an electronic display not to be superposed one on another.

According to one embodiment, a popup window is defined as a window displayed on a display of an electronic device to hide or to be superposed on a portion of a screen under execution.

According to one embodiment of the present disclosure, an electronic device using split window and a popup window is capable of displaying two or more application execution screens or function execution screens. Thus, the split windows and the popup window are defined as a multi-window.

Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

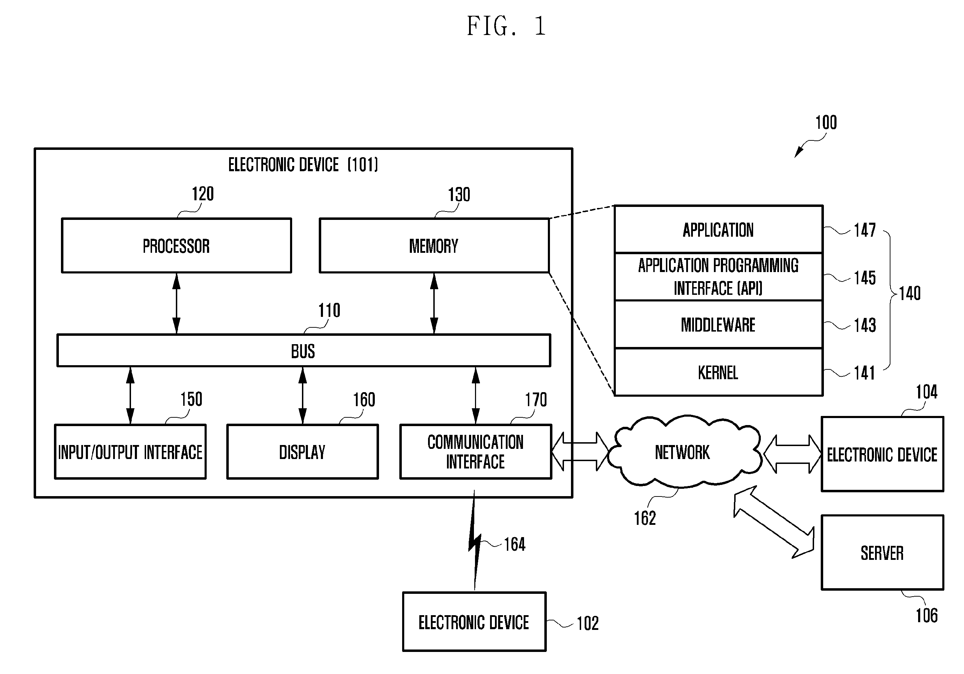

FIG. 1 illustrates a network environment 100 including an electronic device 101 according to various embodiments of the present disclosure.

Referring to FIG. 1, the electronic device 101 includes a bus 110, a processor 120, a memory 130, an input/output interface 150, a display 160, and a communication interface 170.

The electronic device 101 may be configured without at least one of the aforementioned components and/or with at least one other component.

The bus 110 may include a circuit which connects the components 120, 130, 150, 160, and 170 to each other for communication (e.g., control message and/or data communication) therebetween.

The processor 120 may include at least one of a central processing unit (CPU), an application processor (AP), and a communication processor (CP). The processor 120 may perform operations for control and/or communication of the components and process data.

The memory 130 may include a volatile and/or a non-volatile memory. The memory 130 may store commands and data concerning at least one of the components of the electronic device 101. According to an embodiment, the memory 130 may store software and/or the programs 140. The programs 140 may include a kernel 141, a middleware 143, an application programming interface (API) 145, and/or an application 147. At least part of the kernel 141, the middleware 143, and the API 145 may be referred to as operating system (OS).

The kernel 141 may control or manage system resources (e.g., bus 110, processor 120, and memory 130) for executing operations or functions implemented with other programs (e.g., middleware 143, API 145, and application 147). The kernel 141 may also provide an interface for allowing the middleware 143, API 145, and application 147 to access the individual components of the electronic device 101 to control or manage the system resources.

The middle 143 may relay the data communicated between the API 145 or the application 147 and the kernel 141.

The middleware 143 may process at least one task request received from the application 147 according to priority. For example, the middleware 143 may assign a priority to at least one of the application 147 for use of the system resources (e.g., the bus 110, the processor 120, and the memory 130). For example, the middleware 143 may schedule one or more task requests or perform load balancing by processing the at least one task request according to the assigned priority.

The API 145 may be an interface for controlling the functions provided by the kernel 141 and the middleware 143 and may include at least one interface or function (e.g., command) for file control, window control, and video control, and text control.

The input/output interface 150 may work as an interface for transferring a command or data input by a user or an external device to other component(s) of the electronic device 101. The input/output interface 150 may also output a command or data generated by the other component(s) of the electronic device 101 to the user or the external device.

The display 160 may be implemented with one of a liquid crystal display (LCD), a light-emitting diode (OLED) display, an organic LED (OLED) display, a microelectromechanical systems (MEMS) display, and an electronic pater display. The display 160 may display various contents (e.g., texts, images, videos, icons, and symbols). The display 160 may include a touchscreen for receiving various types of inputs such as touch inputs, gesture inputs, proximity inputs, and hovering inputs made by means of an electronic pen or a part of a human body.

The communication interface 170 may be configured for communication between the electronic device 101 and an external device (e.g., first external electronic device 102, second external electronic device 104, and server 106). For example, the communication interface 170 may establish a connection to a network 162 through a wireless or a wired communication link for communication with the external device (e.g., the second external electronic device 104 and the server 106).

The wireless communication may be based on a cellular communication protocol such as long-term evolution (LTE), LTE advanced (LTE-A), code division multiple access (CDMA), wideband CDMA (WCDMA), universal mobile telecommunications system (UMTS), wireless broadband (WiBro), and global system for mobile communications (GSM). The wireless communication may include a short range communication 164. For example, the short range communication 164 may be based on one of Wi-Fi, Bluetooth, near field communication (NFC), magnetic stripe transmission (MST), and global navigation satellite system (GNSS).

The MST may generate a pulse using an electromagnetic signal according to transmission data, and the pulse may generate a magnetic field signal. The electronic device 101 may transmit the magnetic field signal to a POS, and the POS may detect the magnetic field signal using an MST reader and convert the magnetic field signal to an electric signal to recover the data.

The GNSS may be one of a global positioning system (GPS), a Global Navigation Satellite System (GLONASS), a BeiDou Navigation Satellite System (hereinafter, referred to as "BeiDou"), a Galileo system, and a European global satellite-based navigation system. In the following description, the term "GPS" is interchangeably used with the term "GNSS." The wired communication may be based on the protocols such as universal serial bus (USB), high definition multimedia interface (HDMI), recommended standard 232 (RS-232), and plain old telephone service (POTS). The network 162 may be based on a telecommunications network protocol such as a computer network (e.g., local area network (LAN) and wireless area network (WAN)), Internet, or a telephone network.

The first and second external electronic devices 102 and 104 may be identical or different in type from the electronic device 101. According to an embodiment, the server 106 may be a group of one or more servers. According to various embodiments, part or all of the operations executed by the electronic device 101 may be executed by one or more other electronic devices (e.g., external electronic devices 102 and 104 and server 106). According to an embodiment, if it is required to execute a function or a service autonomously or in response to a request, the electronic device 101 may request another device (e.g., external electronic devices 102 and 104 or server 106) for at least part of the function or service instead of or in addition to executing the function or service autonomously. The other electronic device (e.g., external electronic devices 102 and 104 and server 106) may execute the requested function or additional function and transmit the execution result to the electronic device 101. The electronic device 101 may provide the requested function and service as executed or after further processing the execution result. In order to accomplish this, a cloud computing technique, a distributed computing technique, or a client-server computing technique may be used.

The wireless communication may be based on a cellular communication protocol such as LTE, LTE-A, CDMA, WCDMA, UMTS, WiBro, and GSM. The wireless communication may include the short range communication 164. For example, the short range communication 164 may be based on one of Wi-Fi, Bluetooth, NFC, MST, and GNSS.

The MST may generate a pulse using an electromagnetic signal according to transmission data, and the pulse may generate a magnetic field signal. The electronic device 101 may transmit the magnetic field signal to a POS, and the POS may detect the magnetic field signal using an MST reader and convert the magnetic field signal to an electric signal to recover the data.

The GNSS may be one of a GPS, a GLONASS, a BeiDou, a Galileo system, and a European global satellite-based navigation system. In the following description, the term "GPS" is interchangeably used with the term "GNSS." The wired communication may be based on the protocols such as USB, HDMI, RS-232, and POTS. The network 162 may be based on a telecommunications network protocol such as a computer network (e.g., LAN and WAN), Internet, or a telephone network.

The first and second external electronic devices 102 and 104 may be identical or different in type from the electronic device 101. According to an embodiment, the server 106 may be a group of one or more servers. According to various embodiments, part or all of the operations executed by the electronic device 101 may be executed by one or more other electronic devices (e.g., external electronic devices 102 and 104 and server 106). According to an embodiment, if it is required to execute a function or a service autonomously or in response to a request, the electronic device 101 may request another device (e.g., external electronic devices 102 and 104 or server 106) for at least part of the function or service instead of or in addition to executing the function or service autonomously. The other electronic device (e.g., external electronic devices 102 and 104 and server 106) may execute the requested function or additional function and transmit the execution result to the electronic device 101. The electronic device 101 may provide the requested function and service as executed or after further processing the execution result. In order to accomplish this, a cloud computing technique, a distributed computing technique, or a client-server computing technique may be used.

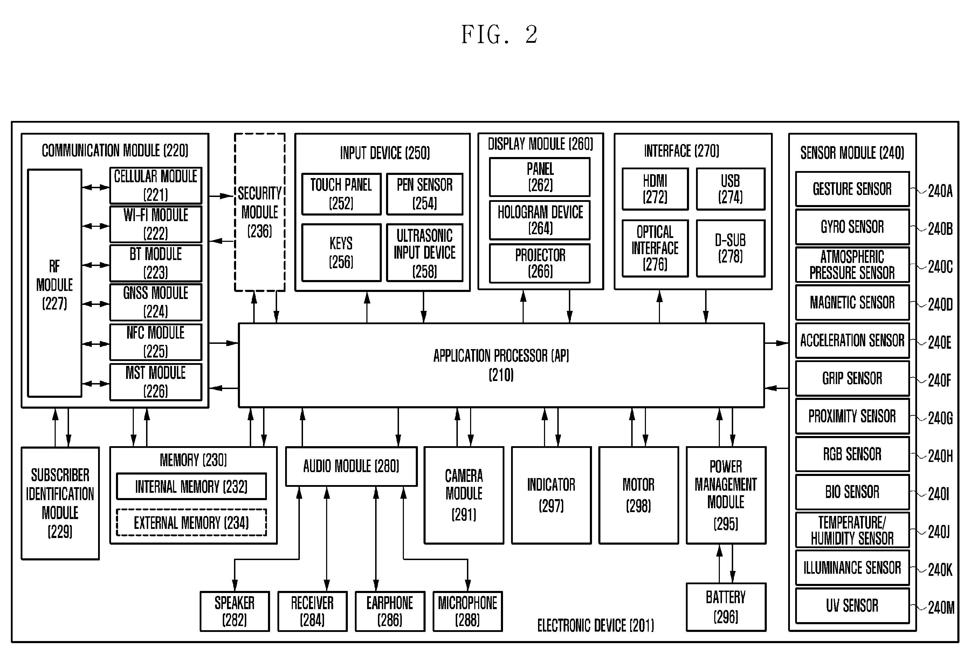

FIG. 2 is a block diagram illustrating a configuration of an electronic device 201 according to various embodiments of the present disclosure.

Referring to FIG. 2, the electronic device 201 may include part or the whole of the electronic device 101 of FIG. 1. The electronic device 201 may include at least one processor (e.g., AP) 210, a communication module 220, a subscriber identification module (SIM) 229, a memory 230, a sensor module 240, an input module 250, a display 260, an interface 270, an audio module 280, a camera module 291, a power management module 295, a battery 296, an indicator 297, and a motor 298.

The processor 210 may execute the operating system or application programs to control a plurality of hardware and software components connected to the processor 210 and perform various data processing and operations. The processor 210 may be implemented in the form of a system on chip (SoC). According to an embodiment, the processor 210 may further include a graphics processing unit (GPU) and/or an image signal processor. The processor 210 may include at least part of the components (e.g., cellular module 221) depicted in FIG. 2. The processor 210 may load a command or data received from at least one of the other components (e.g., non-volatile memory) to a volatile memory and store various types of data in the non-volatile memory.

The communication module 220 may be identical, in configuration, with or similar to the communication interface 170 of FIG. 1. The communication module 220 may include a cellular module 221, a Wi-Fi module 222, a Bluetooth module 223, a GNSS module 224 (e.g., a GPS module, a GLONASS module, a BeiDou module, and a Galileo module), an NFC module 225, an MST module 226, and a radio frequency (RF) module 227.

The cellular module 221 may support voice communication, video communication, text messaging service, and Internet service through a communication network. According to an embodiment, the cellular module 221 may perform identification and authentication on the electronic device in the communication network using the SIM module (e.g., SIM card) 229. According to an embodiment, the cellular module 221 may perform part of the functions of the processor 210. According to an embodiment, the cellular module 221 may include a CP.

Each of the Wi-Fi module 222, the Bluetooth module 223, the GNSS module 224, the NFC module 225, and the MST module 226 may include a processor for processing data. According to an embodiment, at least part (e.g., two or more) of the cellular module 221, the Wi-Fi module 222, the Bluetooth module 223, the GNSS module 224, the NFC module 225, and the MST module 226 may be included in an integrated chip (IC) or an IC package.

The RF module 227 may transmit/receive a communication signal (e.g. RF signal). The RF module 227 may include a transceiver, a power amp module (PAM), a frequency filter, a low noise amplifier (LNA), and an antenna. According to an embodiment, at least one of the cellular module 221, the Wi-Fi module 222, the Bluetooth module 223, the GNSS module 224, the NFC module 225, and the MST module 226 may transmit/receive an RF signal through a separate RF module.

The SIM 229 may be implemented in the form of a card or an embedded SIM storing subscriber information and may include unique identity information (e.g., integrated circuit card identifier (ICCID) or subscriber information (e.g., international mobile subscriber identity (IMSI)).

The memory 230 (e.g., memory 130) may include at least one of the internal memory 232 and the external memory 234. The internal memory 232 may include at least one of a volatile memory (e.g., dynamic random access memory (DRAM), synchronous DRAM (SDRAM)), a non-volatile memory (e.g., programmable read only memory (PROM), one time PROM (OTPROM), erasable PROM (EPROM), electrical EPROM (EEPROM), mask ROM, and flash ROM), a flash memory (e.g., NAND flash and NOR flash), a hard drive, and a solid state drive (SSD).

The external memory 234 may include a flash drive, a compact flash (CF) card, a secure digital (SD) card, a micro-SD card, a mini-SD card, an extreme digital (xD) card, a multi-media card (MMC), and a memory stick. The external memory 234 may be functionally and/or physically connected to the electronic device 201 through various interfaces.

The security module 236 may be a module having a storage space with a security level higher than that of the memory 230 and may have a circuit for guaranteeing data storage security and a secured execution environment. The securing module 236 may be implemented with a separate circuity and may include a separate processor. The security module 236 may be implemented in a detachable smart chip or an SD card or may include an embedded secure element (eSE) in a fixed chip of the electronic device 201. The security module 236 may operate on an OS which is not the OS of the electronic device 201. For example, it may operate on the java card open platform (JCOP).

The sensor module 240 may measure a physical quantity or operation status of the electronic device and convert the measured or sensed information to an electric signal. The sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g. red, green, blue (RGB) sensor), a biometric 240I, a temperature/humidity sensor 240J, an illuminance sensor 240K, and an ultra violet (UV) sensor 240M. Additionally or alternatively, the sensor module 240 may include an E-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), and a fingerprint sensor (not shown). The sensor module 240 may further include a control circuit for controlling at least one of the sensors included therein. According to an embodiment, the electronic device 201 may include a processor configured to control the sensor module 240 as part of or in addition to the processor 210 and may control the sensor module 240 while the processor 210 is in a sleep state.

The input module 250 may include a touch panel 252, a (digital) pen sensor 254, keys 256, and an ultrasonic input unit 258. The touch panel 252 may be one of a capacitive, a resistive, an infrared, and a microwave type touch panel. The touch panel 252 may further include a control circuit. The touch panel 252 may further include a tactile layer to provide the user with a haptic reaction.

The (digital) pen sensor 254 may be a cognitive sheet implemented as a part of the touch panel or separately. The keys 256 may include physical buttons, optical keys, and a keypad. The ultrasonic input unit 258 is a device capable of detecting an ultrasonic wave generated by an input tool by means of a microphone 288 and checking data corresponding to the detected ultrasonic wave.

The display 260 (e.g., display 160) may include a panel 262, a hologram device 264, and a projector 266. The panel 262 may be identical, in configuration, with or similar to the display 160 of FIG. 1. The panel 262 may be flexible, transparent, and/or wearable. The panel 262 and the touch panel 252 may be integrated into a single module. The hologram device 264 may project a 3-dimensional image in the air using interference of light. The projector 266 may project an image to a screen. The screen may be placed inside or outside the electronic device. According to an embodiment, the display 260 may include a control circuit for controlling the panel 262, the hologram device 264, and the projector 266.

The interface 270 may include an HDMI 272, a USB 274, an optical interface 276, and a D-subminiature (D-sub) connector 278. The interface 270 may include the communication interface 170 as shown in FIG. 1. Additionally, or alternatively, the interface 270 may include a mobile high-definition link (MHL) interface, an SD/MMC card interface, and an infrared data association (irDA) standard interface.

The audio module 280 may convert a sound to an electric signal and vice versa. At least part of the audio module 280 may be included in the API 145 of FIG. 1. The audio module 280 may process the audio information input or output through a speaker 282, a receiver 284, an earphone 286, and the microphone 288.

The camera module 291 is a device capable of taking still and motion pictures and, according to an embodiment, includes at least one image sensor (e.g. front and rear sensors), a lens (not shown), an image signal processor (ISP) (not shown), and a flash (e.g., LED and xenon lamp) (not shown).

The power management module 295 may manage the power of the electronic device 201. According to an embodiment, the power management module 295 may include a power management IC (PMIC), a charger IC, a battery, and a battery or fuel gauge. The PMIC may be implemented in a wired and/or wireless charging solution. The wireless charging solution may be one of a magnetic resonance-based solution, a magnetic induction-based solution, and an electromagnetic wave-based solution, and it may require at least one of a coil loop, a resonance circuity, and a rectifier. The battery gauge may measure residual power of the battery 296, charging voltage, current, and temperature. The battery 296 may include a rechargeable battery and/or a solar battery.

The indicator 297 may display operation status of the electronic device 201 or part of the electronic device, booting status, messaging status, and charging status. The motor 298 may convert an electronic signal to mechanical vibration or generate vibration or a haptic effect. Although not shown, the electronic device 201 may include a processing unit (e.g., GPU) for supporting mobile TV. The processing unit for supporting the mobile TV may be able to process the media data according to a broadcast standard such digital multimedia broadcasting (DMB), digital video broadcasting (DVB), and media flow.

The above enumerated components of the electronic device of the present disclosure may be implemented into one or more parts, and the names of the corresponding components may be changed depending on the kind of the electronic device. According to various embodiments, the electronic device of the present disclosure may include at least one of the aforementioned components with omission or addition of some components. According to various embodiments, the components of the electronic device of the present disclosure may be combined selectively into an entity to perform the functions of the components equally as before the combination.

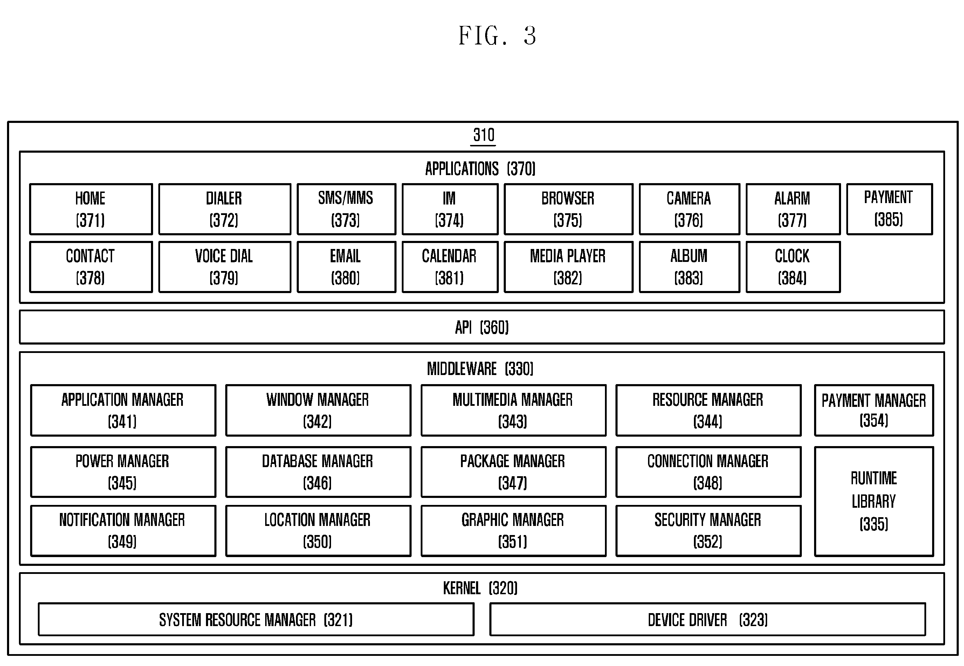

FIG. 3 is a block diagram 300 illustrating a configuration of a program module 310 according to various embodiments of the present disclosure.

Referring to FIG. 3, according to an embodiment, the program module 310 (e.g., programs 140) may include the OS for controlling resources of the electronic device (e.g., electronic device 101) and/or various applications (e.g., application 147) running on the OS. The OS may be one of android™, iOS™, windows™, Symbian™, tizen™, and Samsung bada OS™.

The program module 310 may include a kernel 320, a middleware 330, an API 360, and/or applications 370. At least part of the program module 410 may be preloaded on the electronic device or downloaded from an external electronic device (e.g., external electronic devices 102 and 104 and server 106).

The kernel 320 (e.g., kernel 141) may include a system resource manager 321 and/or at least one device driver 323. The system resource manager 321 may control to allocate and withdraw the system resources. According to an embodiment, the system resource manager 321 may include a process manager, a memory manager, and a file system manager. The at least one device driver 323 may include a display driver, a camera driver, a Bluetooth driver, a shared memory driver, a USB driver, a keypad driver, a Wi-Fi driver, an audio driver, and an inter-process communication (IPC) driver.

The middleware 330 may provide the applications 370 with common functions required for the applications 370 or various functions through the API 360 in order for the applications 370 to use the constrained system resources of the electronic device. According to an embodiment, the middleware 330 (e.g., middleware 143) may include at least one of a runtime library 335, an application manager 341, a window manager 342, a multimedia manager 343, a resource manager 344, a power manager 345, a database manager 346, a package manager 347, a connection manager 348, a notification manager 349, a position manager 350, a graphic manager 351, a security manager 352, and a payment manager 354.

The runtime library 335 may include a library module for use by a compiler to add a new function using a programming language during the execution of the applications 370. The runtime library 335 may perform input/output management, memory management, and arithmetic functions.

The application manager 341 may manage a life cycle of at least one of the applications 370. The window manager 342 may manage graphical user interface (GUI) resources used for a screen. The multimedia manager 343 may check formats of various media files for playback and perform encoding or decoding on the media file using a codec corresponding to the format of the media file. The resource manager 344 may manage the resources such as source codes of at least one of the applications 370, memory, and storage space.

The power manager 345 may interoperate with a basic input/output system (BIOS) to manage the battery or power source and provide power information necessary for the operation of the electronic device. The database manager 346 may create, search, or change a data base for use by at least one of the applications 370. The package manager 347 may manage installation and update of applications distributed in the form of a package file.

The connection manager 348 may manage wireless connectivity of Wi-Fi or Bluetooth. The notification manager 349 may notify the user of events such as incoming message arrival, appointment time, and proximity alert, without bothering the user. The position manager 350 may manage location information of the electronic device. The graphic manager 351 may manage graphic effects to be applied and UIs related thereto. The security manager 352 may provide security functions required for system security and user authentication. According to an embodiment, if the electronic device (e.g., electronic device 101) has a telephony function, the middleware 330 may include a telephony manager for managing voice and video call functions. The payment manager 354 may relay payment information from the applications 370 to the kernel 320. The payment manager 354 may also store the payment information received from an external device in the electronic device 200 and transfer the stored information to the external device.

The middleware 330 may include a middleware module for combining various functions of the aforementioned components. The middleware 330 may be provided with OS-specific modules for supporting differentiated functions. The middleware 330 may also delete part of the preconfigured components or add new components dynamically.

The API 360 (e.g., API 145) may be a set of API programming functions which is configured differently depending on the OS. For example, one API set is provided per platform in case of android™ or iOS™, while two or more API sets can be provided per platform in case of tizen™.

The applications 370 (e.g., application 147) may include a home application 371, a dialer application 372, a short message service (SMS)/multimedia message service (MMS) application 373, an instant message (IM) application 374, a browser application 375, a camera application 376, an alarm application 377, a contact application 378, a voice dialer application 379, an e-mail application 380, a calendar application 381, a media player application 382, an album application 383, a clock application 384, a health care application (for measuring workout intensity or blood sugar level), a payment application 385, and an environment information application (e.g., atmospheric pressure, humidity, and temperature) (not shown).

According to an embodiment, the applications 370 may include an application for supporting information exchange between the electronic device (e.g., electronic device 101) and an external electronic device (e.g., external electronic devices 102 and 104) (hereinafter, referred to as "information exchange application" for explanatory convenience). The information exchange application may include a notification relay application for relaying predetermined information to the external electronic device or a device management application for managing the external electronic device.

For example, the notification relay application may have a function of notifying the external electronic device of the notification information generated by other applications (e.g., SMS/MMS application, email application, health care application, and environment information application). The notification relay application may also provide the user of the notification information received from the external electronic device.

The device management application may manage (e.g., install, delete, and update) at least one of the functions of the external electronic device (e.g., external electronic devices 102 and 104) communicating with the electronic device (e.g., turn-on/off of the external electronic device (or some of the components of the external electronic device) or brightness (or resolution) adjustment of the display), the applications running on the external electronic device, and the services provided by the external electronic device (e.g., telephony service and messaging service).

According to an embodiment, the applications 370 may include an application (e.g., health care application of a portable medical device) designated according to the attributes of the external electronic device (e.g., external electronic devices 102 and 104). According to an embodiment, the applications 370 may include an application received from the external electronic device (e.g., server 106 and external electronic devices 102 and 104). According to an embodiment, the applications 370 may include a preloaded application or a third party application downloadable from the server. The names of the components of the program module 310 may be changed depending on the OS.

According to various embodiments, at least part of the program module 310 may be implemented in one of software, firmware, and hardware, or a combination of at least two thereof. For example, at least part of the program module 310 may be implemented by the processor (e.g., processor 210). At least part of the program module 310 may include sets of modules, programs, routines, or processes for executing at least one function.

The term "module" according to the embodiments of the present disclosure, means, but is not limited to, a unit of one of software, hardware, and firmware or any combination thereof. The term "module" may be used interchangeably with the terms "unit," "logic," "logical block," "component," or "circuit." The term "module" may denote a smallest unit of component or a part thereof. The term "module" may be the smallest unit of performing at least one function or a part thereof. A module may be implemented mechanically or electronically. For example, a module may include at least one of an application-specific IC (ASIC) chip, field-programmable gate arrays (FPGAs), and a programmable-logic device known or to be developed for certain operations.

According to various embodiments of the present disclosure, the devices (e.g. modules or their functions) or methods may be implemented by computer program instructions stored in a computer-readable storage medium. In the case that the instructions are executed by at least one processor (e.g. processor 120), the at least one processor may execute the functions corresponding to the instructions. The computer-readable storage medium may be the memory 130.

The computer-readable storage medium includes magnetic media such as a floppy disk and a magnetic tape, optical media including a compact disc ROM (CD ROM) and a DVD ROM, a magneto-optical medium such as a floptical disk, and the hardware device designed for storing and executing program commands such as ROM, RAM, and flash memory. The programs commands include the language code executable by computers using the interpreter as well as the machine language codes created by a compiler. The aforementioned hardware device can be implemented with one or more software modules for executing the operations of the various exemplary embodiments of the present disclosure.

The module or programming module of the present disclosure may include at least one of the aforementioned components with omission of some components or addition of other components. The operations of the modules, programming modules, or other components may be executed in series, in parallel, recursively, or heuristically. Also, some operations may be executed in different order, omitted, or extended with other operations. Although various embodiments of the present disclosure have been described using specific terms, the specification and drawings are to be regarded in an illustrative rather than a restrictive sense in order to help understand the present disclosure. It is obvious to those skilled in the art that various modifications and changes can be made thereto without departing from the broader spirit and scope of the disclosure.

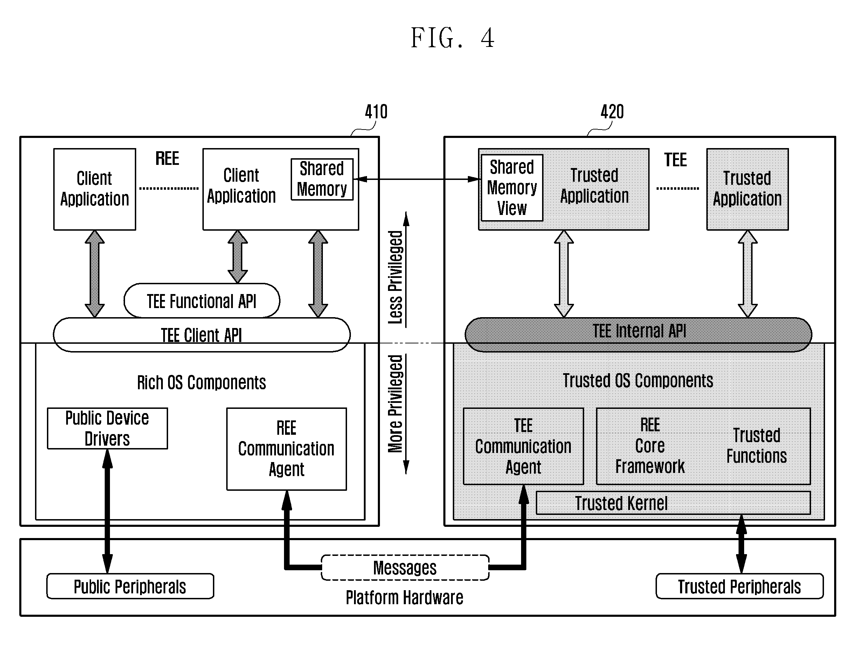

FIG. 4 is a block diagram 400 illustrating a rich execution environment (REE) 410 and a trusted execution environment (TEE) 420 of an electronic device (e.g., electronic device 101) according to various embodiments of the present disclosure.

Referring to FIG. 4, according to various embodiments, the electronic device may operate in multiple execution environments having different security levels for security reinforcement. The execution environments may include the REE 410 and the TEE 420. The REE 410 may be the first execution environment with the first security level. The TEE 420 may be the second execution environment with a security level different from (e.g., higher than) that of the REE 410, i.e., the second security level. According to an embodiment, the electronic device 101 may include, without limitation thereto, an additional execution environment (e.g., third execution environment) having the third security level.

The TEE 420 may store the data with a relatively high security level and perform related operations in a secure environment. The TEE 420 is located in the application processor of the electronic device based on a hardware structure configured reliably in the manufacturing state of the electronic device. The TEE 420 may be located in a secure area of the application processor or memory that is divided into a normal and a secure area. The TEE 420 may be configured such that any security-required software or hardware unit operates in the secure region. The electronic device may manage the TEE 420 by modifying the hardware physically or the software logically.

The TEE 420 and REE 410 may be separated from each other through hardware restriction and may operate on the same hardware in a software manner. At least one application running in the REE 410 (e.g., payment application, contact application, email application, and browser) may use the API allowed to access the TEE 420. At least one application may use the API to transfer a message from an REE communication agent to a TEE communication agent. The message may be configured to be delivered in the TEE 420 in a hardware manner. The TEE communication agent may transfer the received message to a trusted application (TA) (e.g., digital rights management (DRM), secure payment module, and secure biometric information module) concerning the message. The security application may perform an operation concerning the message and transmit the operation result to the REE communication agent by means of the TEE communication agent. The REE communication agent may transmit the result to at least one application running in the REE 410.

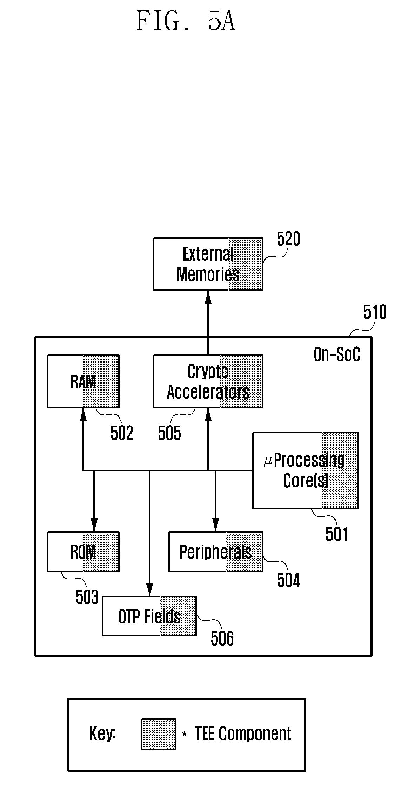

FIGS. 5A to 5C are block diagrams illustrating hardware structures of a TEE according to various embodiments of the present disclosure.

FIG. 5A shows a case where a processor and a memory are divided into an REE and a TEE in a hardware manner (e.g., trustzone (TZ) of advanced reduced instruction set computer (RISC) machines (ARM)). According to an embodiment, the hardware structure of the TEE may be included in an On-SoC 510 and the external memories 520. The On-SoC 510 may include a micro-processing core 501, a RAM 502, a ROM 503, peripherals 504, crypto accelerators 505, and one time password (OTP) fields 506. The TZ may be used in such a way of dividing the processor into REE and TEE in the time domain to secure at least two execution environments. The TZ may also be used in such a way of dividing a memory into an REE-accessible zone and a TEE-accessible zone.

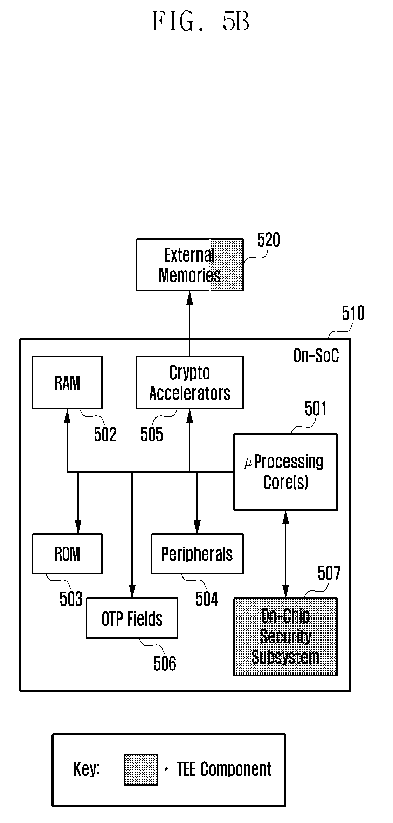

FIG. 5B shows a case where the processor for the TEE is implemented in the form of an on-chip along with the processor for the REE, but there is a separate processing core set. According to an embodiment, the On-SoC 510 may further include an On-chip security subsystem 507 having at least one processor in addition to the micro-processing core 501. In this case, the On-SoC 510 may be configured to operate the REE, and the On-chip security subsystem 507 to operate the TEE.

Referring to FIG. 5B, it may be possible to divide one memory into two zones for use in the REE and the TEE, respectively, as in FIG. 5A.

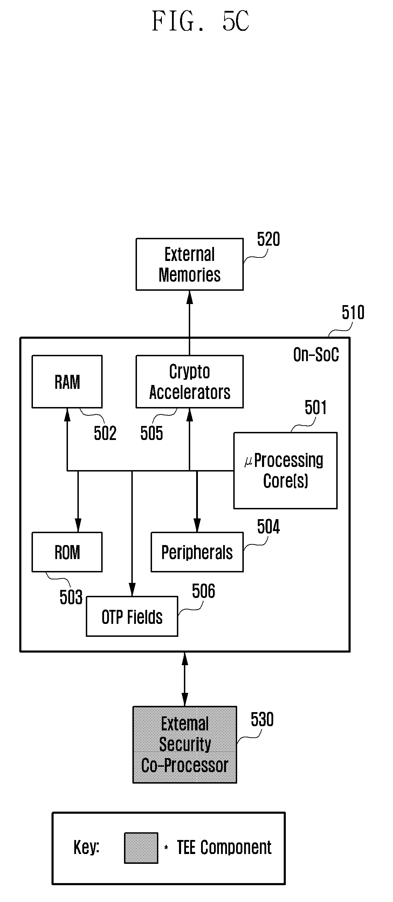

FIG. 5C shows a case where the processor for the TEE is implemented as a separate chip in a hardware manner so as to be separated from the chip in which the processor for the REE is implemented.

Referring to FIG. 5C, the On-SoC 510 is operating in the REE, and at least one external security co-processor 530 implemented outside the On-SoC 510 may be configured to operate in TEE.

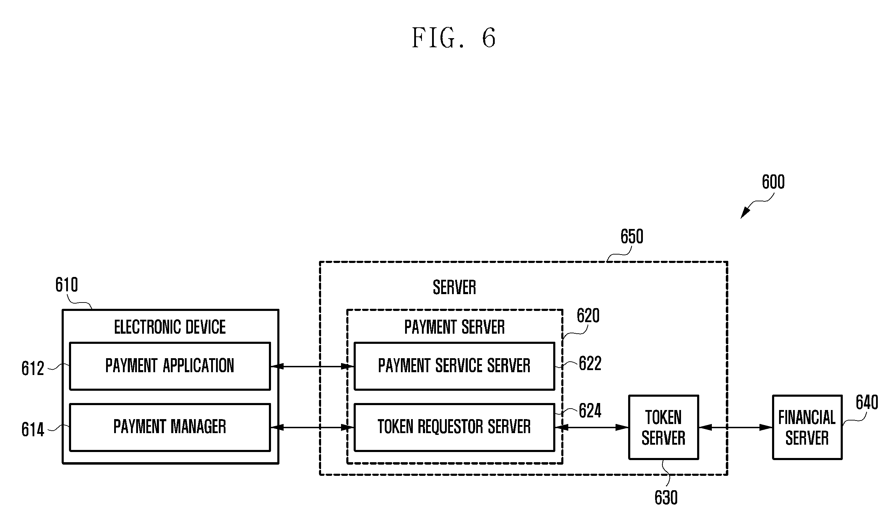

FIG. 6 is a diagram illustrating a payment system according to various embodiments of the present disclosure.

Referring to FIG. 6, according to various embodiments, the payment system 600 may include an electronic device 610 and a server 650. For example, the server 650 may include a payment server 620, a token server (token service provider (TSP)) 630, and a financial server (issuer) 640. The electronic device 610 may include a payment application (wallet application) 612 and a payment manager 614. The payment server 620 may include a payment service server 622 and/or a token requester server 624.

According to various embodiments, the payment application 612 may be a Samsung Pay™ application. The payment application 612 may provide a payment-related UI or user experience (UX). The payment-related UI may include a wallet UI/UX. For example, the payment application 612 may provide a UI concerning card registration, payment, and transaction. The payment application 612 may provide an interface concerning optical character reader/recognition (OCR) or external input (e.g., user input) card registration. The payment application 612 may also provide an interface concerning identification and verification (ID&V) for user authentication.

According to various embodiments, the payment application 612 may support payment transaction. For example, the payment application 612 may provide the user with a payment function by executing a designated application such as Simple Pay and Quick Pay. The user may execute the payment function of the payment application 612 and receive payment function-related information.

According to various embodiments, the payment manager 614 may have information on the card company. For example, the payment manager 614 may include a software development kit (SDK).

According to various embodiments, the payment server 620 may include an electronic payment or mobile payment management server. The payment server 620 may transmit the payment information received from the electronic device 610 to an external device or process the information by itself.

According to various embodiments, the payment server 620 may relay information between the electronic device 610 and the token server 630 by means of the payment service server 622 and/or the token requester server 624. The payment service server 622 may be the payment server (e.g., Samsung payment server) 620. The payment service server 622 may manage a service account (e.g., Samsung account) or card information associated with the user account. The payment service server 622 may include an API server related to the payment application 612. The payment service server 622 may also be provided with an account management module (e.g., account integration or Samsung account integration module).

According to various embodiments, the token requester server 624 may provide an interface for processing the payment information. For example, the token requester server 624 may issue, delete, and activate the payment information. The token requester server 624 may be functionally connected with the payment manager 614 to control the payment information.

According to various embodiments, the payment application of the electronic device 610 may be functionally connected to the payment service server 622 of the payment server 620. For example, the payment application 612 may exchange payment information with the payment server 620. According to an embodiment, the payment manager 614 of the electronic device 610 may be functionally connected to the token requester server 624 of the payment server 620. For example, the payment manager 614 may exchange the payment information with the token requester server 624.

According to various embodiments, the token server 630 may issue and manage the payment information (e.g., token). For example, the token server 630 may control the life cycle of the token (i.e., generate, update, or terminate the life cycle of the token). The token server 630 may include a token management server and perform token provisioning, ID&V, replenishment, and life cycle management. It may also integrate information on the financial server.

According to various embodiments, the payment server 620 and the token server 630 may be located in the same or similar area or separated areas. For example, the payment server 620 may be included in the first server, and the token server 630 may be included in the second server. For example, the payment server 620 and the token server 630 may be implemented distinctly in one server (e.g., first or second server).

According to various embodiments, the financial server 640 may issue a card. For example, the financial server 640 may be a property of a card issuance bank. It may also generate information necessary for payment of the user. The user may store the payment information in the electronic device 610 using the payment application 612. The financial server 640 may be functionally connected to the token server 630 to exchange the payment information.

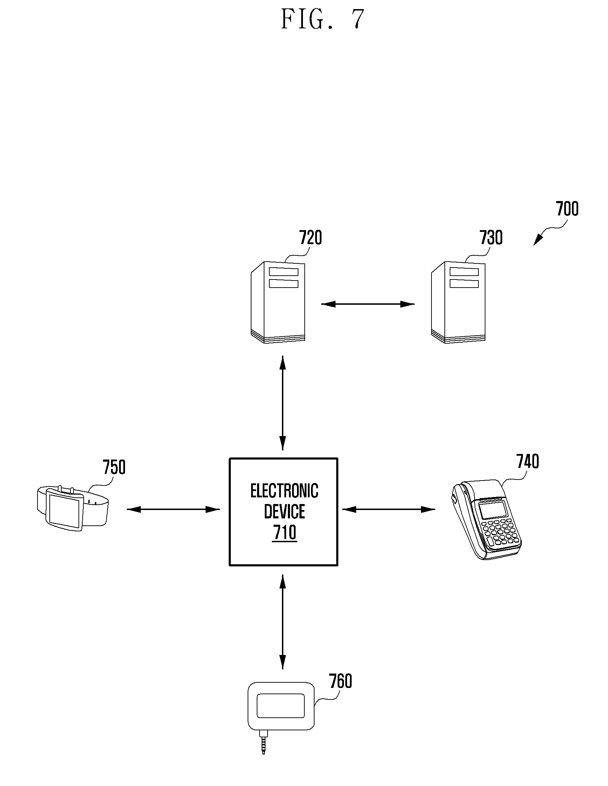

FIG. 7 is a diagram 700 illustrating a payment system according to various embodiments of the present disclosure.

Referring to FIG. 7, the payment system may include an electronic device 710 (e.g., electronic device 101), a payment server 720 (e.g., server 106), a TSP 730 (e.g., server 106), another server (not shown), and a POS 740 (e.g., external electronic device 102). According to an embodiment, the payment system may include at least one auxiliary electronic device 750 or 760. The at least one auxiliary electronic device may be a wearable device (e.g., smart watch) or an accessory (e.g., fob type device of LoopPay™) that are functionally connectable to the electronic device 710. According to an embodiment, the fob type device of LoopPay™ may include an external payment module connected to the electronic device 710 by means of a microphone.

According to an embodiment, the electronic device 710 may execute the payment function. The electronic device 710 may register a credit card such as a MasterCard™ and a Visa™ card with the electronic device 710 or the payment server 720 for the payment function. The payment server 720 may manage the information on a plurality of registered cards including the cards registered by means of an auxiliary electronic device (e.g., auxiliary electronic device 750) of the user or other users' electronic devices.

According to an embodiment, the payment server 720 may acquire the token information corresponding to the registered card information from the TSP 730 and transmit the token information to the electronic device 710. The payment server 720 may include the payment service server or the token requester server. The payment service server may manage the card information of the user. It may be possible to provide an account-based payment service. The token requester server may request to the TSP 730 for token information required for payment operation. The TSP 730 may issue a token for use in the payment procedure.

According to an embodiment, the token may be a value substituting the primary account number (PAN) as the card information. According to an embodiment, the token may be generated based on the bank identification number (BIN). The generated token may be encrypted by the TSP 730 or transmitted to the payment server 720 such that the payment server 720 encrypts the token. The encrypted token information may be transmitted to the electronic device 710 via the payment server 720 and then decrypted by the electronic device 710. According to an embodiment, the token may be generated and encrypted by the TSP 730 and then transmitted to the electronic device 710 directly. According to an embodiment, the payment server 720 may have a token generation function and, in this case, the payment system may not have the TSP 730.

The electronic device 710 pay perform payment using at least one of the auxiliary electronic devices 750 and 760 that are functionally connected based on a short range communication protocol (e.g., Bluetooth and Wi-Fi). According to an embodiment, the auxiliary electronic device 750 may be a wearable device (e.g., smart watch) and, in this case, the electronic device 710 may transmit the token received from the TSP 730 to the wearable device. According to an embodiment, the auxiliary electronic device 760 may be an accessory (e.g., fob type device of LoopPay™) and, in this case, the electronic device 710 may be functionally connected with the accessory (e.g., fob type device of LoopPay™) via the input/output interface 150 (e.g., earphone 286).

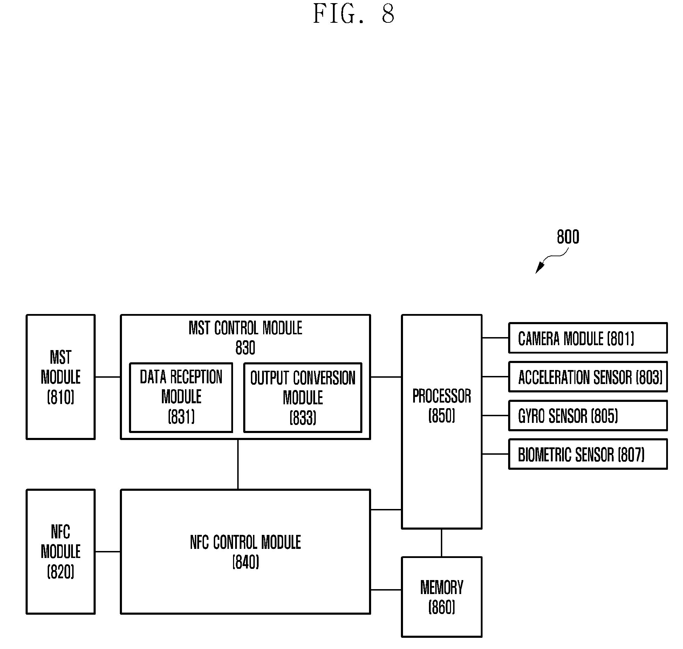

FIG. 8 is a block diagram 800 illustrating a hardware configuration of the electronic device (e.g., electronic device 101) capable of the payment function according to various embodiments of the present disclosure.

Referring to FIG. 8, according to an embodiment, the electronic device may include a camera module 801, an acceleration sensor 803, a gyro sensor 805, a biometric sensor 807, an MST module 810, an NFC module 820, an MST control module 830, an NFC control module 840, a processor 850, and a memory 860. The camera module 801 may take a picture of the card for use in payment to acquire card information. The camera module 801 may acquire the card information (e.g., card company, card number, card expiration date, and card owner) from the surface of the card using the OCR function. Also, the user may input the card information using the input device (e.g., touch panel, pen sensor, keys, ultrasonic wave input device, and microphone) of the electronic device.

According to an embodiment, the acceleration sensor 803 or the gyro sensor 805 may acquire location information of the electronic device in payment. The location information of the electronic device (e.g., electronic device 101) is transmitted to the processor 850, which adjusts the strength of the magnetic field (current) radiated by the MST module based on the location information of the electronic device and, if there are multiple coil antennas, selects the coil antenna in use.

According to an embodiment, the MST control module 830 may include a data reception module 831 and an output conversion module 833. The data reception module 831 may receive a pulse signal including the payment information transmitted by the processor 850 or the security module (e.g., eSE) in a logical low/high format.

The output conversion module 833 may include a circuit for converting the data recognized by the data reception module 831 to a format required for transmission to the MST module 810. The circuit may include an H-Bridge for controlling the direction of the voltage supplied to both ends of the MST module 810. The H-Bridge may include a circuit establishing connection in the shape of H using 4 switches.

According to an embodiment, the electronic device may receive the payment information (e.g., track 1/2/3 and token information) included in the magnetic stripe of the magnetic card from the card company/bank server by means of a communication module (not shown) based on the card information input by means of the camera module 801 or the input device (e.g., touch panel and pen sensor) and store the payment information in the memory 860 or the separate security module 236 (e.g., eSE) in a required form.

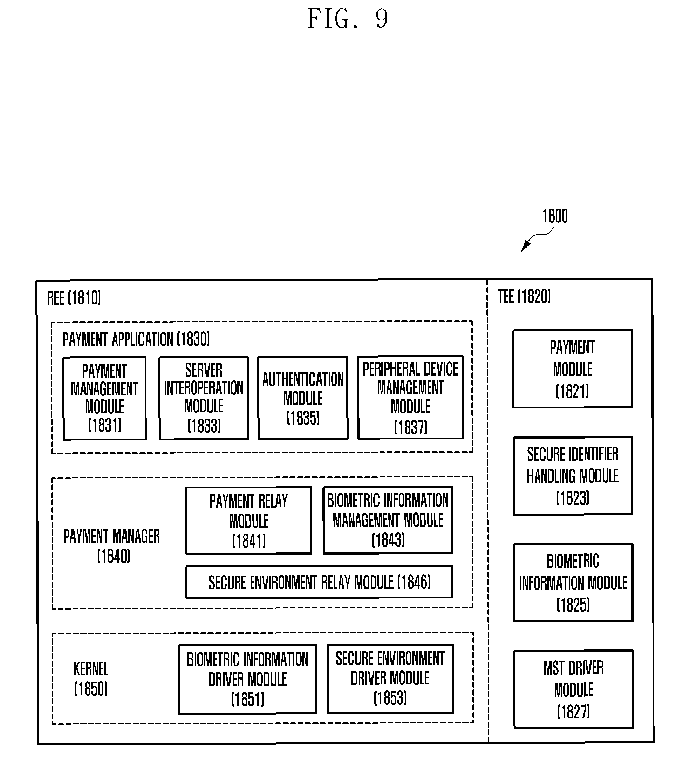

FIG. 9 is a block diagram 1800 illustrating program modules running in an execution environment 1801 of the electronic device (e.g., electronic device 101) having a payment function according to various embodiments of the present disclosure.

Referring to FIG. 9, the execution environment 1801 may include an REE 1810 and a TEE 1820.

According to an embodiment, the REE may include a payment application 1830 (e.g., payment application 385), a payment manager 1840 (e.g., payment manager 354), and a kernel 1850 (e.g., kernel 320). According to an embodiment, the payment application 1830 may include a payment management module 1831, a server interoperation module 1833, an authentication module 1835, and a peripheral device management module 1837.

According to an embodiment, the payment management module 1831 may perform card registration, card authentication, card deletion, and payment operations. The payment management module may register a card of the user. The electronic device (e.g., electronic device 101) may receive a card registration request from the user. The electronic device may acquire a card image by means of the camera module. The payment management module may acquire a card image using the OCR module. The payment management module may receive card information (e.g., password, residence address, email address, phone number, and account ID) input by the user or transmitted by the payment server 720.

According to an embodiment, the payment management module 1831 may display the registered card to the user using the display 160. The user may correct at least part of the registered card information (e.g., card name, residence address, phone number, number of payment tries, and payment notification information). The payment management module 1831 may display the registered card information on the wearable device (e.g., smart watch) which is functionally connected with the electronic device.

According to an embodiment, the payment management module 1831 may perform the payment operation using the registered card. The user may select at least one of multiple registered cards for payment. The user may bring the electronic device to the POS 740. The payment management module 1831 may display product information (e.g., price) received from the POS 740 on the display 160. The payment management module 1831 may perform user authentication (e.g., fingerprint authentication) for payment by means of the authentication module 1835. If authentication is successful, the payment management module 1831 may display payment completion notification information on the display 160.

According to an embodiment, the electronic device (e.g., electronic device 101 or 710) may transmit the payment information to the POS by means of at least one of the MST module and NFC module. In order to increase the recognition rate, it may be possible to transmit the payment information using both the MST module and the NFC module simultaneously. It may also be possible to transmit the payment information by means of the MST module and, if payment fails, transmit the payment information by means of the NFC module. If the POS or a third party (e.g., financial institution) device transmits a payment failure alarm or if a predetermined time expires, this is recognized as payment failure. According to various embodiments, the two successive operations may be performed substantially at the same time or in reverse order.

According to an embodiment, the electronic device may receive a request for delete at least one of the cards registered by the user. The payment management module 1831 may delete the information on the corresponding card from the memory 130. The payment management module 1831 may request to the payment server 720 for deleting the information on the at least one card.

According to an embodiment, the payment management module 1831 may determine whether there is a match between the card owner and the user who registers the card. The payment management module 1831 may include the ID&V. The payment management module 1831 may perform user authentication through, for example, text messaging, emailing, an action request system (ARS), or telephone communication. It may also be possible to perform authentication using an application issued by a card company or a bank. The card registered with the payment management module 1831 may be used after passing authentication.

According to an embodiment, the payment management module may include an OCR module. The OCR module may acquire an image of text written by a person or printed by a machine by means of a scanner and convert the image to machine-readable text. The electronic device may acquire an image of the card of the user by means of the camera module. The OCR module may convert the image, text, and numbers acquired from the card image to machine-readable text. The OCR module may acquire the card information (e.g., card number, user name, and expiry) from the converted text. The electronic device may perform a card registration procedure using the card information acquired by the OCR module.

According to an embodiment, the payment management module 1831 may display a barcode generated for the purpose of payment on the display 160. For example, the payment management module 1831 may receive a command for generating the barcode that can be read by a barcode reader for payment. The payment management module 1831 may generate a barcode according to the command.

According to an embodiment, the server interoperation module 1833 may receive a payment-related message, a device-related message, or a service-related message from the payment server 720 or the TSP 730. The server interoperation module 1833 may forward the message to the payment management module 1831.

According to an embodiment, the server interoperation module 1833 may include a push management module and an account management module. For example, if the message is received from the payment server 720 in the form of a push notification related to the token, the push management module may process the received message and, if the received message includes account information (e.g., Samsung account), the account management module may process the received message.

According to an embodiment of the present disclosure, the push management module may handle the received push notification or push message information. The push message may be delivered to the server interoperation module 1833 of the payment application 1830 via the payment relay module 1841 of the payment manager 1840 or 354 or to the payment application 1830 directly. At least part of the push messages may be transferred to the payment management module 1831 for card information update and synchronization with the payment server 720.

According to an embodiment, the payment service 720 may include an account server for managing account information or a token requester server for providing payment information. The account server and the token requester server may be implemented in a separate device (e.g., server 106) or included in one device.

According to an embodiment, the message information received at the push management module may include token and payment information (such as token provisioning, token suspension, token disposal, token status change, token replenishment, and transaction notification information) as shown in Table 1.

The messages transmitted/received by the account management module may include at least part of the electronic device information such as lost device check function (e.g., "lost device" and "find my mobile"), remote lock (e.g., remote lock/unlock), membership management (e.g., loyalty/membership cards), and web interoperation function (e.g., website portal-online).

**Table 1**

| Push management | Use case | Details |
|---|---|---|
| Token | Token provisioning with ID&V | External server sends card information for identification and verification to push management module for use |
| | | in token installation and authentication |
| | Token suspension | Transmitted from external server to push management module of electronic device for token use suspension |
| | Token resume | Transmitted from external server to push management module of electronic device for token reuse |
| | Token disposal | Transmitted from external server to push management module of electronic device for token disposal |
| | Token status chang e | Transmitted from external server to push management module of electronic device for token status change |
| | Token Replenishmen t | Transmitted from external server to push management module of electronic device for token replenishment |
| | Transaction Notification | Transmitted from external server (management server) to push management module of electronic device for transaction notification |
| Device | Lost Device (Find my mobile) | Exchange between external server (service server) and account management module of electronic device for lost device information notification |
| | Remote lock/unlock | Exchange between external server (service server) and account management module of electronic device for commanding remote lock/unlock |
| | Loyalty/Membership cards | Exchange between external server (service server) and account management module of electronic device for sharing member information |
| | Website (online) | Exchange between external server (service server) and account management module of electronic device for supporting web interoperation function |

According to an embodiment, if the token provisioning ID&V information is transmitted to the external server successfully via the payment server 720 and the token information is valid, the server interoperation module 1833 may forward a "push token {id} status changed" message to the payment management module 1831.

According to an embodiment of the present disclosure, the card information suspension (e.g., token suspension) information acquired at the payment management module 1831 of the electronic device may be used to transition the card configuration state from the active state to the inactive state for mobile payment by transferring the use suspension command of the payment server 720 to the payment application.

According to an embodiment, if a lost device event occurs, the payment server 720 may delete all token information stored therein or suspend use of the information. In order to accomplish synchronization with the payment application 1830, a push message may be transmitted. The payment server 720 may transmit the push message to the payment application 1830 via the payment relay module 1841 or the server interoperation module 1833 (e.g., push management module and account management module).

With reference to Table 2, the push API supported by the electronic device and payment relay module 1841 may be implemented depending on the payment relay module 1831.

**Table 2**

| API | Description | type | validation |
|---|---|---|---|
| device.push | Contains push platform | Json | required |
| device.push.spp.id | Samsung Push Id. | String | required |
| device.push.gcm.id | Google Push Id. | String | optional |

According to an embodiment, the account management module may manage a unique user identifier (e.g., Samsung account ID or device ID), card, and membership information exchanged with the payment server 720 by means of the payment application. The user identifier may include a unique identifier of the subscriber account, portal account concerning the electronic device, or the electronic device (e.g., model name, media access control (MAC) address, international mobile equipment identity (IMEI), serial number, universally unique ID (UUID), and ID) for managing the cards (e.g., Visa™ card and MasterCard™ card) issued by different card companies. The unique identifier may also be a value generated by the payment server 720 in association with the account.

The payment management module may perform management (e.g., registration, addition, deletion, re-registration check, usage suspension, and usage resume of the card) using the user account or electronic device identifier. Even in the case of importing/exporting card information between the electronic device and a wearable device, it may be possible to perform registration, addition, deletion, re-registration check, usage suspension, and usage resumption of the card based on the created account or electronic device identifier.

At this time, the account-based management method may integrally manage multiple electronic devices sharing one account or devices using device-specific accounts (e.g., Samsung account) or an account.

According to an embodiment, the first card (e.g., Visa™ card) and second card (e.g., MasterCard™ card) information generated by the OCR of the payment management module 1831 may be used to register the corresponding cards based on the account (e.g., registration02@samsung.com) created in subscribing to the Samsung account. At this time, the registered information may be shared with the payment server 720 based on the created account.

According to an embodiment, the membership information generated through the barcode interface may be used for registering the first card (e.g., Samsung points card) and the second card (e.g., CJ membership points card) based on the account (e.g., registration01@samsung.com) created in subscribing to the Samsung account. The registered information may be synchronized with the payment server 720 based on the created account.

The user may determine the active/inactive state of the card based on the account after logging in thereto by means of the payment application and transmit the determination result to the payment server 720 using the payment management module 1831 and, alternatively it may be possible to transition the account-based card state in a server management webpage (e.g., server portal).

The account management module may manage the card information (e.g., Visa™ card ID&V) and membership information (e.g., CJ membership points and registration001@Cj.com) associated with the service account (e.g., registration01@samsung.com) in cooperation with the server. The membership information may be used to accumulate or redeem points automatically, when paying by credit card, in association with the payment handling information (e.g., pay amount) and membership mileage information (e.g., points and miles).

If the payment application including the account management module is installed, it may be possible to maintain the configured state of part or all of the registered cards by logging in or signing in to the user account at a time using any device. It may also be possible to reduce extra authentication processes by registering and associating the membership information with a relatively low authentication security level in a user account-centric manner.

According to an embodiment, the authentication module 1835 may display a UI for card or user authentication on the display 160 in the payment process. The authentication module may include a biometric information module.

According to an embodiment, the biometric information module may acquire biometric information of the user. The biometric information of the user may include fingerprint, iris, face image, voice, heartbeat, and blood pressure information. The electronic device may acquire the biometric information of the user by means of the sensor module. For example, it may be possible to acquire the fingerprint information of the user by means of the fingerprint sensor. The electronic device may also acquire the iris information of the user by means of the camera module. The biometric information module may display a UI for acquiring the biometric information of the user on the display 160.

According to an embodiment, the biometric information module may perform, when the user tries payment using the card information registered with the electronic device, authentication for acquiring secure data (e.g., token) from the secure memory (e.g., eSE and memory accessible in a secure environment) which is functionally connected to the electronic device. The electronic device may acquire biometric information of the user (e.g., fingerprint and iris information) by means of the biometric information module for user authentication. The acquired biometric information may be transferred to a biometric information management module 1843 of the payment manager 1840. According to an embodiment, the secure memory may be a memory storing data with an encrypted key.

According to an embodiment, the biometric information management module 1843 may perform, when the user tries electronic payment on a webpage, the payment process using the card information registered to the electronic device and the biometric information. In order to acquire secure data (e.g., token) from the memory connected functionally to the electronic device or the security module (e.g., eSE and memory accessible in a secure environment), the user may perform authentication. If the user authentication is successful, the electronic device may perform fast automated authentication (e.g., fast identity online (FIDO)) in cooperation with an external server without extra electronic payment process on a webpage.

According to an embodiment, the electronic device may designate a fingerprint of the user and a card for use in payment. For example, in the case that the payment application is used for fingerprint-based authentication, the user may register the right hand thumb for payment with the Visa™ card and the right hand index finger for payment with the MasterCard™ card.

According to an embodiment, the peripheral device management module 1837 may manage external devices connected functionally with the electronic device. The peripheral device management module 1837 may include an MST peripheral device module and a wearable device module.

According to an embodiment, the MST peripheral device module may output information on whether there is any MST accessory (e.g., LoopPay™ fob device) connected to the electronic device through a wired/wireless link and provide a UI suitable for the user based on the output information. The UI may display the card registration, deletion, or payment process in progress in the state where an MST accessory is connected. The MST peripheral device module may store the information on various cards required for payment in the memory of the electronic device or the MST accessory in the state that the MST accessory is connected. This makes it possible to perform payment using the electronic device or the MST accessory independently even in the state that the MST accessory is not connected.

The wearable device module may output information indicating whether any wearable device (e.g., watch, headset, glasses, and ring) is connected to the electronic device through a wired/wireless link and provide the user with a UI based on the information. The wired/wireless link may be established based on various communication protocols such as Bluetooth, Bluetooth low energy (BLE), Wi-Fi, ZigBee, Z-wave, and specific accessory protocol (Samsung accessory protocol (SAP). The UI may present the card registration, deletion, and payment process in progress in the state where the wearable device is connected. In the card registration, deletion, and payment process, the wearable device module may output information indicating whether a short range communication protocol-based secure session is established with the wearable device, exchange information input to the electronic device and/or wearable device, and display the process in progress. The user input may include the information on various cards for use in payment and supplementary authentication information (e.g., personal ID number (PIN), user-specific unique pattern data, fingerprint recognition data, and bezel or display of wearable device).

According to an embodiment, the electronic device may share payment information with a wearable device or an accessory. For example, the information on a Visa™ card may be stored in both the wearable device and the electronic device. According to an embodiment, the electronic device may store the information on different cards linked to a predetermined card in the wearable device or the accessory. For example, one of the two tokens issued in association with the Visa™ card information may be stored in the electronic device and the other in the accessory or the wearable device. According to an embodiment, in the case that one of the two tokens issued in association with certain card information may be stored in the electronic device and the other in the accessory or the wearable device, the payment module of one device may be activated while the payment module of the other device is deactivated. For example, if a token issued in association with the Visa™ card information is stored in the electronic device and another token is stored in the accessory or the wearable device, the payment module of the electronic device may be deactivated when the wearable device is used for payment. In the case of using the electronic device for payment, the payment module of the wearable device may be deactivated.

According to an embodiment, the payment manager 1840 may include a payment relay module 1841, a biometric information management module 1843, and a secure environment relay module 1846. According to an embodiment, the payment relay module 1841may relay the card information or related information (e.g., token) to the payment application, the kernel, or the payment server 720. The payment relay module 1841 may perform offline payment by means of a communication module (e.g., NFC module and MST module). The NFC-based payment may be made through POS, and the MST-based payment may be made with a user input. The payment relay module 1841 may support online payment by means of a communication module (e.g., cellular module, RF module, and Wi-Fi module).

According to an embodiment, the payment relay module 1841 may perform state management (e.g., card/token lifecycle management) on the card or the information (e.g., token) corresponding to the card. The payment relay module 1841 may provide the payment application 1830 with at least one API concerning payment.

According to an embodiment, the payment relay module 1841 may include system service interfaces for payment, payment service for access to the payment module, TZ-based integrity measurement architecture (TIMA) for kernel integrity authentication, fingerprint recognition result inquiry (e.g., secure and non-secure modes supportability), and secure UI for PIN or PAN input. The payment relay module 1841 may include an encryption library for transferring message or commands to the TEE 1820. The payment relay module 1841 may exchange messages or commands with the TEE 1820 through the encrypted library.

According to an embodiment, the payment relay module 1841 may include a card management function for adding, deleting, and updating card information. The payment relay module 1841 may include the first payment SDK or the second payment SDK. The first payment SDK (e.g., Samsung SDK) may be embedded in the electronic device. The second payment SDK may be provided by the card company or the bank and may be installed in the electronic device. The payment relay module 1841 may select one of the first and second payment SDKs based on the card information. The payment relay module 1841 may configure a default card or select a certain card other than the default card.

According to an embodiment, the payment relay module 1841 may have a normal token and key management function to transmit to the payment server 720 at least one of a token provisioning message, a token replenishment message, a token suspension message, a token resume message, and a token disposal message.

According to an embodiment, a payment module 1821 may acquire a token or a token cryptogram from the electronic device or an external electronic device. A key for use in generating the token and token cryptogram (e.g., limited use key (LUK) and single use key) may be stored in the REE 1810 or TEE 1820. In the case of storing the token and the key in the REE 1810, the payment module of the TEE may encrypt them using the key (e.g., device root key (DRK)) of the TEE 1820. In the case that the electronic device is used for payment, the payment relay module 1841 may acquire the token decrypted by means of the payment module. The electronic device may store the key for generating the token cryptogram or the token in a form encrypted with the key of the TEE.

According to an embodiment, the payment relay module 1841 may transmit a push message received from the TSP 730 to the payment application.

According to an embodiment, if the first payment SDK (provided by the card company or bank) provides a token management function, the payment relay module 1841 may include a function for relaying the received token management function request to the second payment SDK. If the token or key is acquired with the SDK of the Visa™ card, the payment relay module may transmit the token or key to the payment module of the TEE 1820 using the Samsung SDK. According to an embodiment, the payment relay module 1841 may include a host card emulation (HCE) function which is capable of using a software virtual card at the electronic device on the payment framework without a hardware device (e.g., security module or SE) in the payment process. The HCE function may transmit the token or token cryptogram by means of the communication module (e.g., NFC) using a POS-related message standard (e.g., application protocol data unit (APDU)).

According to an embodiment, the payment relay module 1841 may have a function of processing a message received from the POS. The POS message processing function may include managing payment data to be transmitted to the POS. If the first payment SDK provides the POS message processing function, the POS message interpretation function may include a function of relaying the POS message to the first payment SDK. According to an embodiment, the payment relay module 1841 may include at least one database for storing card data, token data, and transaction data.

According to an embodiment, the payment relay module 1841 may select one of an NFC payment method and an MST payment method. For example, the payment may be made in an order of the NFC payment method and the MST payment method or in reverse order or with the NFC and MST payment methods simultaneously. According to an embodiment, in the case that payment is made with one communication module and then another communication module, if no response is received in reply to the result of the payment made through the communication module or a predetermined time period expires, the payment relay module may try payment with another communication module.

According to an embodiment, if the payment relay module 1841 has both the token and PAN information per card, it may make a payment using at least one of them. The payment relay module may determine whether the POS supports PAN-based payment or token-based payment. For example, the electronic device may receive available payment method information through BLE and check the information by means of the payment relay module. The payment relay module may try payment with the token or PAN depending on the checked information.

According to an embodiment, the payment relay module 1841 may include an SDK provided by the payment network. The SDK may include a token management, POS message processing, or token/card database.

According to an embodiment, the secure environment relay module 1846 may have a relay function for allowing the payment application to access a biometric information driver module 1851 or a secure environment driver module 1853 to use the functions provided by the payment module 1821 or a biometric information module 1825. The payment relay module 1841 may have an encryption library to transmit a message or a command to the secure environment relay module 1846. The payment relay module 1841 may exchange the message or command with the secure environment relay module 1846 using the encryption library.

According to various embodiments, the payment management 1840 may include the secure environment relay module 1846 for allowing the payment application to use the function of the secure identifier handling module of the TEE.

According to an embodiment, the payment relay module 1841 may have a function of relaying the authentication request generated with the PIN input by means of the payment application 1830 to a secure identifier handling module 1823.

A general application may acquire information indicating whether the fingerprint recognition is successful or not. The secure payment application (payment trusted app) may acquire a secure biometric result (secure fingerprint result). The secure biometric result may be generated in the form of an encrypted combination of a one-time random number and recognition success/failure information. The one-time random number may be encrypted with a hardware key (e.g., DRK of the TEE 1820.

According to an embodiment, the payment relay module 1841 may send the payment module 1821 a message instructing to perform payment through the secure environment driver module 1853. The payment module 1821 may notify the payment relay module 1841 of the necessity of an authentication operation via the secure environment driver module 1853. The payment relay module 1841 may command the biometric sensor 240I to collect biometric information for authentication via the biometric information management module 1843 and the biometric information driver module 1851. The payment relay module 1841 may also send the biometric information module 1825 of the TEE 1820 an authentication acknowledgement message via the biometric information management module 1843 and the secure environment driver module 1853. The biometric sensor 240I may acquire the information from the biometric information module 1825 of the TEE 1820. The biometric information module 1825 may compare the previously stored user's biometric information and the information acquired by the biometric sensor to identify the user. The biometric information module 1825 may transmit the authentication result to the biometric information management module 1843 via the secure environment driver module 1853 based on the checked information, and the biometric information management module 1843 may forward the authentication result to the payment relay module 1841. The payment relay module 1841 and the biometric information management module 1843 may be implemented as an integrated module or separated modules.

According to an embodiment, the payment relay module 1841 may perform authentication by means of an external device. For example, the electronic device may request to the payment server 720 (e.g., Samsung account server or token requester server) for authentication of the biometric information (e.g., fingerprint and iris). The payment server 720 may perform authentication of the user's biometric information and transmit the result to the electronic device. If the authentication has been completed, the payment relay module 1841 may perform a token provisioning procedure by transmitting data including the information indicating authentication completion to the TSP. Also, if the authentication has been completed, the electronic device may perform payment or not depending on the authentication result.

According to an embodiment, the kernel 1850 may include the biometric information driver module 1851 and a secure environment driver module. The biometric information driver module may transmit the message received from the biometric information management module 1843 of the payment manager 1840 to the biometric sensor 240I. The biometric information collected by the biometric sensor may be transmitted to the biometric information module 1825 via the biometric information driver module of the TEE 1820 but not to any module of the REE 1810.

According to an embodiment, the secure environment driver module 1853 may work as an interface for transmission from any module of the REE 1810 to any module of the TEE 1820. In the case of the TZ of ARM as an example of the TEE, the application processor may perform the REE and TEE operations in a time division manner, and a separate data pass for transferring a message from the REE to the TEE in a hardware manner. In this case, the driver module for accessing the hardware may be the secure environment driver module 1853. The secure environment driver module may transmit a message related to the operation of a module of the TEE to a module of the REE.

According to an embodiment, the TEE may include the payment module 1821, the secure identifier handling module 1823, the biometric information module 1825, and an MST driver module 1827. The electronic device 701 may store data requiring a high security level in a secure environment through the TEE 1820 and perform related operations. The TEE 1820 may operate on the application processor of the electronic device, and a reliable TEE determined at the manufacturing stage of the electronic device may denote a secure area in the electronic device. The electronic device may handle the data requiring a relatively high security level in a secure hardware structure through the TEE. The TEE may operate in a normal zone and a secure zone formed by dividing the processor and memory region. It may also be possible for the security-requiring software or hardware to operate in a secure area. In the case that the REE 1810 has to perform operations related to sensitive information, it may be possible to access the TEE 1820 only through the APIs and drivers accessible to the TEE 1820. The TEE may transfer the restricted data of the related information to the REE. The TEE may encrypt the internally store data using a hardware key (e.g., DRK). The data in the TEE may not be interpreted without a separate decryption process.

The application (e.g., trusted application) inside the TEE may transmit a message to an external electronic device (e.g., TSP 730).

According to an embodiment, the TEE may include a trusted OS and trusted applications. It may also include a security-related encryption module and a driver for collecting data in the hardware requiring security. The trusted application may include a payment module. It may transmit the payment information by means of the communication module. For example, it may transmit the payment information to the POS by means of the MST controller via the MST driver or of the NFC controller via the NFC driver.

According to an embodiment, it may be possible to check the integrity to the REE 1810. The electronic device may store the integrity information of the image of the REE in the TEE 1820. In the case of the REE booting supporting TEE, if a bootloader is executed, it boots the TEE and then the REE. If the TEE is booted, it may be possible to check the integrity information of the REE inside the TEE and, after the boot-up of the TEE, present it to the user. According to an embodiment, if the REE image is damaged by hacking or rooting, it may be possible to determine that there is a problem in integrity. In the case that an integrity problem occurs, it may be possible to block access to the TEE. For example, when the payment relay module 1841 transmits a message or a command to the TEE by means of the secure environment driver module 1853, the kernel of the TEE may ignore the message or the command or deny receipt of the message.

According to an embodiment, the payment module 1821 may be an application installed by the bank of the card company (e.g., Visa™ and MasterCard™ companies). There may be one or more payment modules. If the user accesses to the payment server 720 (e.g., mobile application platform, payment gateway, token requestor, TSP, trusted service manager, and bank server) or the TSP 730 through the Internet by means of the electronic device to accept installation of the payment module 1821, the TSP 730 may perform installation-related operations. For example, the payment management module 1831 may acquire a card number and expiration date of a plastic card by means of the OCR and perform a card registration operation for installing the payment module 1821 in the server. The card company/bank connects to the TSP 730 located in the network by means of the payment relay module 1841 having the connection information of the TSP 730 to receive an installation file, and the payment relay module 1841 transmit the information to the TEE to install the payment module 1821. This process may be referred to as a provision process or a card registration process. There may be multiple payment modules in the TEE. The respective payment modules cannot exchange data and are isolated from each other inside the TEE.

According to an embodiment, the payment module 1821 may be an application for use in data communication with the payment server 720. The payment module may include the information indicating that the card is a credit card, a debit card, or a membership card. The payment module may perform encrypted communication with the external electronic device. The encryption process may be performed differently depending on the card manufacturing company that has transmitted the payment module. The server may control the state of the payment module. For example, it may be possible to have activation, suspension, resumption, or disposal of the payment module.

According to an embodiment, the payment module 1821 may store the information related to the card information. For example, the information may include at least one of a card information (e.g. token corresponding to PAN), a token reference ID, part of PAN, PAN product ID, token requestor ID, token assurance level, token assurance data, token expiration date, encryption key, and value provided by the TSP 730 (e.g., one time password (OTP). The token may be controlled according to the state of the TSP 730. For example, there may be activation, suspension, resumption, or disposal of the token.

According to an embodiment, the payment module 1821 may select a card for use in payment. For example, one of the multiple payment management modules that corresponds to the card selected by the user may be used in payment. The payment management module may transmit the information on the determined card to the payment relay module 1841. The payment relay module may transmit the selected card information to the payment module 1821 via the secure environment driver module 1853. The payment module may manage a list of the cards for use in real payments. The card list may be updated based on the selected card information. The card list update may be performed in such a way of increasing priority of the selected card and deleting the card information of the non-selected cards.

According to an embodiment, the payment module may create information for use in payment based on the information related to the card information. The information for use in payment may include the token, token reference ID, part of the PAN, PAN product ID, token requestor ID, token assurance level, token assurance data, token expiration date, token cryptogram, POS entry mode, and token requestor indicator. The information for use in payment is shown in Table 3.

**Table 3**

| Field Name | Comment |
|---|---|
| Payment Token | The Payment Token number refers to a surrogate value for a PAN that is a 13 to 19-digit numeric value that passes basic validation rules of an account number, including the Luhn check digit. Payment Tokens are generated within a BIN range or Card range that has been designated as a Token BIN Range and flagged accordingly in all appropriate BIN tables. Payment Tokens are generated such that they will not have the same value as or conflict with a real PAN. Transaction messages The Payment Token number will be passed through the authorization, capture, clearing, and exception messages in lieu of the PAN. The Payment Token number may optionally be passed from the TSP to the Card Issuer as part of the authorization request. |
| Token Expiry Date | The expiration date of the Payment Token that is generated by and maintained in the Token Vault. The Token Expiry Date field carries a 4-digit numeric value that is consistent with the international organization for standardization (ISO) 8583 format. |
| | Transaction messages |
| | The Token Expiry Date is passed in lieu of PAN Expiry |
| | Date. |
| | The value is replaced by the TSP with the PAN Expiry Date which is then passed to the Card Issuer as part of the authorization request. |
| Last 4 Digits of PAN | The last four digits of the PAN to be provided optionally through the Acquirer to the Merchant for customer service usage such as being printed on the consumer receipt. |
| PAN Product ID | The last four digits of the PAN to be provided optionally through the Acquirer to the Merchant for customer service usage such as being printed on the consumer receipt. |
| PAN Product ID | The PAN Product ID is an optional identifier used for determining the type of Card product that was tokenized. It may be included in cases where transparency of this information is necessary. |
| | Transaction messages |
| | The PAN Product ID may optionally be passed from the TSP to the Acquirer as part of the authorization response. |
| POS Entry Mode | This specification uses the POS Entry Mode field to indicate the mode through which the Payment Token is presented for payment. Each Payment Network will define and publish any new POS Entry Mode values as part of its existing message specifications and customer notification procedures. |
| | Transaction messages |
| | POS Entry Mode is an existing field that will be passed through the authorization, capture, clearing, and exception messages. |
| Token Requestor ID | This value uniquely identifies the pairing of Token Requestor with the Token Domain. Thus, if a given Token Requestor needs Tokens for multiple domains, it will have multiple Token Requestor IDs, one for each domain. It is an 11-digit numeric value assigned by the TSP and is unique within the Token Vault: |
| | Positions 1-3: TSP Code, unique to each TSP |
| | Positions 4-11: Assigned by the TSP for each requesting entity and Token Domain |
| | Transaction messages |
| | Token Requestor ID can be optionally passed through the authorization, capture, clearing, and exception messages. |
| Token Assurance Level | Token Assurance Level is a value that allows the TSP to indicate the confidence level of the Payment Token to PAN/Cardholder binding. It is determined as a result of the type of ID&V performed and the entity that performed it. The Token Assurance Level is set when issuing a Payment Token and may be updated if additional ID&V is performed. It is a two-digit value ranging from 00, which indicates the Payment Token has no ID&V that has been performed, to a value of 99 indicating the highest possible assurance. The specific method to produce the value is defined by the TSP. Transaction messages |
| | Token Assurance Level will be provided by the TSP. |
| | The value may be optionally passed to the Card Issuer as part of the authorization request. |
| | The value may optionally be passed to the Acquirer/Merchant in the authorization response, capture, clearing, and exception processing messages. |
| Token Assurance Data | This data provided by the TSP contains supporting information for the Token Assurance Level. |
| | Transaction messages |
| | This data may be optionally passed to the Card Issuer as part of the authorization request. |
| Token Cryptogram | This cryptogram is uniquely generated by the Token Requestor to validate authorized use of the Token. The cryptogram will be carried in different fields in the transaction message based on the type of transaction and associated use case: |
| | NFC contactless transactions will carry the Token Cryptogram in existing chip data fields. |
| | Other transactions, such as those originating from a digital wallet, may carry the Token Cryptogram in an existing field. |
| | Transaction messages |
| | The Token Cryptogram will be passed in the authorization request and validated by the TSP and/or the Card Issuer. |
| Token Request Indicator | An indicator used to indicate that the message is intended to authenticate the Cardholder during a Payment Token Request. |

According to an embodiment, the payment module 1821 may receive a key (e.g., LUK or single use key) for generating a token cryptogram via the TSP 730 or the payment server 720 (e.g., payment service server or token requester server). The key may be received through a data network or SMS.

The key may be exchanged between the electronic device and the TSP 730 through a secure channel. The secure channel may be a logical channel encrypting data with a key (e.g., public key and private key) that is different from the above key. It may also be possible to include a module for generating a key for creating the token cryptogram in the payment module. The electronic device may receive the key generation module via the TSP 730 or the payment server 720. It may also be included at the manufacturing stage of the electronic device.

According to an embodiment, the payment module may generate the token cryptogram using a token cryptogram creation key (e.g., limited use key or single use key). The payment module may use a key determined differently according to a predetermined rule, e.g., every transaction, a number of transactions, and transactions in a predetermined period. The TSP 730 may have a key paired with the key. The TSP 730 may decode the token cryptogram encrypted with the paired keys.

According to an embodiment, the payment module 1821 may generate the token cryptogram with the token cryptogram creation key.

According to an embodiment, the electronic device may transmit a message indicating the use of the payment application to the payment relay module 1841. The payment relay module 1841 may determine whether to use MST or NFC for payment. In the case of using MST, the payment relay module may transmit the information required for payment (e.g., token, token cryptogram, part of PAN information, and token expiration date) acquired from the payment module of the TEE to the MST driver module 1827 inside the TEE. The MST driver module 1827 may transmit the above information to the MST controller. The MST controller may transmit the above information for use in payment.

According to an embodiment, in the case of using NFC for payment, the electronic device may transmit the information required for payment to the NFC driver module of the TEE. The NFC driver module may transmit the information for use in payment to the NFC controller. The NFC controller may perform payment based on the information.

According to an embodiment, in the case of using NFC for payment, the electronic device may perform payment upon receipt of a message designated by the POS. For example, if the NFC module detects the message designated by the POS 740, the NFC controller transmits the message to the NFC driver module. The NFC driver module may notify the payment relay module 1841 of the REE that the message transmitted by the POS has arrived. The payment relay module 1841 may generate a token cryptogram for use in payment. The token cryptogram may be generated by the payment module 1821 of the TEE using a token cryptogram creation key (e.g., limited use key and single use key). The generated token cryptogram is delivered to the REE. The payment relay module 1841 may transmit the payment-related information including the token and token cryptogram through the network module (e.g., NFC-related host card emulation module). The network module may transmit the payment-related information to the POS by means of the NFC module.

According to an embodiment, the payment module may transmit the information including the token, token expiration date, token requestor ID, and token cryptogram to an external electronic device. For example, the payment module may transmit the payment information to the POS 740 by means of the MST communication module. It may also be transmitted by means of the NFC communication module.

According to an embodiment, the payment module may exchange information designated for payment operation with the POS 740. In the case of NFC, the POS may receive the information. In the case of MST, the payment information including the token and token cryptogram is transmitted according to an explicit user input or according to an algorithm embedded in the electronic device.

According to an embodiment, the biometric information module 1825 may store the user's biometric information in use by the electronic device and compare the biometric information with the information collected by the biometric sensor to authenticate the user. The biometric information module 1825 may be a fingerprint information module or an iris information module. The biometric information module may receive the information collected by the biometric sensor 240I. If the payment application displays a message asking for authentication of the biometric information of the user on the display 160, the user may input biometric information by means of the biometric sensor. The authentication module of the payment application may transmit a message instructing to collect biometric information to the biometric information driver module 1851 by means of the biometric information management module. The biometric information driver module may transmit the message to the biometric sensor. The biometric sensor may collect biometric information and transmit the collected information to the TEE. The biometric information module of the TEE may compare the collected biometric information with the stored user's biometric information and transmit the authentication result to the authentication module of the payment application via the biometric information management module of the REE by means of the secure environment driver module. The payment application may display the authentication result on the display. The user's biometric information may be stored in the TEE or in the REE or the security module 236 (e.g., eSE) in an encrypted state.

According to an embodiment, the secure identifier handling module 1823 may acquire an input value required in the electronic device or concerning authentication for payment through a user input form. For example, the input value may be a PIN number for use in payment. The input value may also be card information. For example, the input value may be a PAN, card expiration date, or card verification value (CVV). The input value may be a chip PIN or ATM PIN. The secure identifier handling module 1823 may be displayed in the form of an application. A graphic library for drawing the secure identifier handling module application on the screen may be stored in the TEE 1820. The graphic library stored in the TEE may differ from the graphic library stored in the REE 1810. The secure identifier handling module may perform user authentication with the input value such as PIN and transmit the authentication result to the payment management module 1831 via the payment relay module 1841. According to an embodiment, the secure identifier handling module may receive an encrypted one-time random number (e.g., nonce) transmitted by the secure environment relay module 1846. The secure identifier handling module 1823 may encrypt the user input value and the one-time random number with the encryption key (e.g., device root key) of the TEE and transmit the encryption result to the secure environment relay module 1846. The secure environment relay module may transmit the encrypted user input value and one-time random number to the payment module 1821. The payment module may decode the user input value and one-time random value using a hardware key of the TEE. The payment module may verify the integrity of the input value received from the REE based on the match between the one-time random number and the received value. The payment module may perform user authentication based on the integrity of the input value. The payment module may perform payment based on the user authentication result. According to an embodiment, a factory reset may be an operation of rolling back the software image of the electronic device to the factory settings. This operation may be performed by an application in response to an explicit user input. A module configured to determine a hacking under a predetermined condition (e.g., when it is determined that the system is hacked) may perform the factory reset. Since this operation resets all data stored in the electronic device, the payment information may also be reset. The payment information may be stored in the payment server 720. In the case that the user accesses an account on the payment server 720, it may be possible to register the card and install the payment module based on the payment information. If the electronic device is reset, the payment module of the electronic device may notify the TSP 730 of the reset via the payment server such that the TSP 730 is deactivated. In the case that the network to which the electronic device is connected is deactivated, it may be impossible to make a notification. In this case, the electronic device may perform the factory reset and access the account on the payment server 720. The electronic device may check the registered card list on the payment server 720 and deactivate the card module and token of the registered electronic device in the TSP 730. The electronic device may register the cards based on the card list acquired from the payment server 720 and receive the payment module or token.

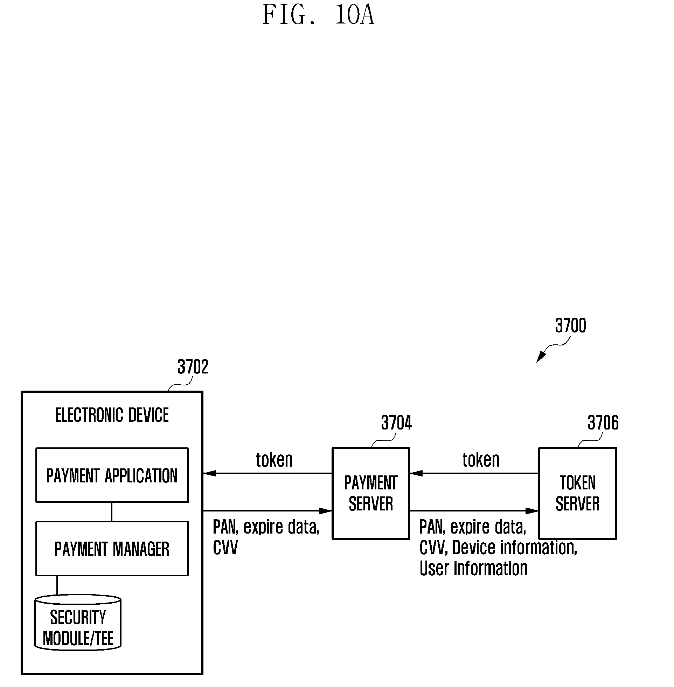

FIGS. 10A to 10C are diagrams illustrating token issuance operations of the electronic device according to various embodiments of the present disclosure.

According to various embodiments, the token issuance operation may vary depending on the country (region). For example, the token issuance operation may be performed differently in the USA, Europe, and the Republic of Korea.

FIG. 10A shows a first token issuance process 3700 for issuing a first token to an electronic device according to an embodiment of the present disclosure. The first token issuance process may be performed among an electronic device 3702, a payment server 3704, and a token server 3706. The electronic device 3702 may include at least one of a payment application, a payment manager, a security module, and a TEE.

According to various embodiments of the present disclosure, the electronic device 3702 may acquire information related to a card by means of a sensor which is functionally connected to the electronic deice 3702. The card information may be used in a card registration operation. The sensor may include an OCR. The card information may include at least one of PAN, expiration date, and CVV. The sensor may perform the sensing operation by means of the payment application of the electronic device 3702.

According to various embodiments, the payment application installed in the electronic device 3702 may transmit the card information to the payment server 3704. The payment server 3704 may include a payment service server or a token requester server, and they may exchange the card information.

According to an embodiment, the payment server 3704 (e.g., token requester server) may send the token server 3706 the card information and the information on the electronic device 3702 (e.g., device information and user information). The information on the electronic device 3702 may include the information that was requested for the first token issuance operation.

According to an embodiment, the token server 3706 may issue (generate) a token based on the information received from the payment server 3704.

According to an embodiment, the token server 3706 may transmit the token based on the information received from the payment server 3704. The token server 3706 may transmit the token to the token requester server included in the payment server 3704.

According to an embodiment, the payment server 3704 may relay the token to the electronic device 3702. The token server 3706 may transmit the token to the electronic device 3702 by means of the token requester server.

According to an embodiment, the electronic device 3702 may store the token received from the payment server 3704 in the security module or the TEE. For example, the electronic device 3702 may store the token in a secure region such as the security module and the TEE for controlling access from outside.

According to an embodiment, the electronic device may store the token received from the payment server 3704 in a normal memory (e.g. memory included in the REE).

According to an embodiment, one or more tokens can be issued (generated) depending on the payment scheme (e.g., OTP and call center-based transaction) of the electronic device 3702.

According to an embodiment, it may be possible to issue (generate) just one token to the electronic device 3702. For example, the first electronic device may include the first token, and the second electronic device may include the second token. The first and second tokens may differ from each other.

According to an embodiment, the token may be activated through an authentication operation (e.g., ID&V). For example, the token may be stored in the electronic device 3702 and activated through the authentication operation. The authentication operation may include user identification. The user identification may be performed with the financial server.

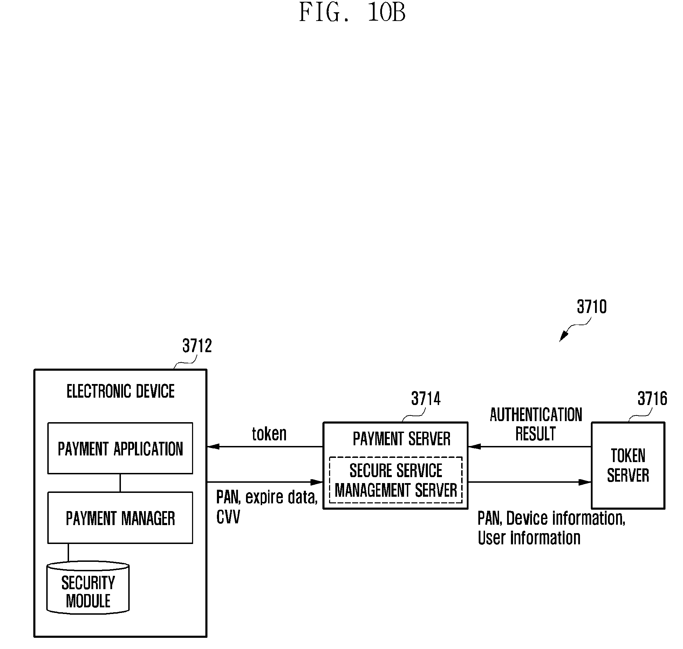

FIG. 10B shows a second token issuance process 3710 for issuing a second token to the electronic device according to various embodiments of the present disclosure.

Referring to FIG. 10B, the second token issuance process may be performed among an electronic device 3712, a payment server 3714, and a token server 3716. The electronic device 3712 may include at least one of a payment application, a payment manager, and a security module. The payment server 3714 may include a secure service management server.

According to various embodiments, the electronic device may acquire the card information by itself or by means of a sensor which is functionally connected to the electronic device. The card information may be used in registering the card. The sensor may include the OCR. The card information may include at least one of PAN, expiration date, and CW. The sensor may acquire the card information using a payment application installed in the electronic device.

According to various embodiments, the payment application installed in the electronic device 3712 may send the payment server 3714 the card information. The payment server 3714 may include a payment service server or a token requester server which may exchange the card information.

According to an embodiment, the payment server 3714 may transmit the card information to the secure service management server included in the payment server 3714. The secure service management server may be implemented inside or outside the payment server. The secure service management server may be included in another device (e.g., external device) and functionally connected to the payment server to exchange the card information.

According to an embodiment, the secure service management server may send the token server 3716 the card information and/or information concerning the electronic device (e.g., device information and user information). The information concerning the electronic device 3712 may be of the device requesting for the second token.

According to an embodiment, the token server 3716 may perform authentication based on the information received from the payment server 3714. The token server 3716 may perform the authentication operation based on the card information and the information concerning the electronic device 3712.

According to an embodiment, the token server 3716 may inform the authentication result (e.g. success and failure) to the secure service management server included in the payment server 3714.

According to an embodiment, the secure service management server may issue (generate) the token based on the card information and/or the information concerning the electronic device 3712.

According to an embodiment, the secure service management server may store the token in a secure region (e.g., security module) of the electronic device 3712. For example, the secure service management server may have the right to access the secure region of the electronic device 3712. The secure service management server may store the token in the secure region of the electronic device 3712 using the access right. The token may be transmitted from the secure service management server to the electronic device 3712.

According to an embodiment, the electronic device may store the token in the secure region, i.e., security module, for use in controlling access from the outside.

According to an embodiment, one or more tokens can be issued (generated) depending on the payment scheme (e.g., OTP and call center-based transaction) of the electronic device 3712.

According to an embodiment, it may be possible to issue (generate) one token to the electronic device 3712. For example, the first electronic device may have the first token, and the second electronic device may have the second token. The first and second tokens may differ from each other.

According to an embodiment, the token may be activated through an authentication operation (e.g., ID&V). For example, the token may be stored in the electronic device 3712 and activated through the authentication operation. The authentication operation may include user identification. The user identification may be performed with the financial server.

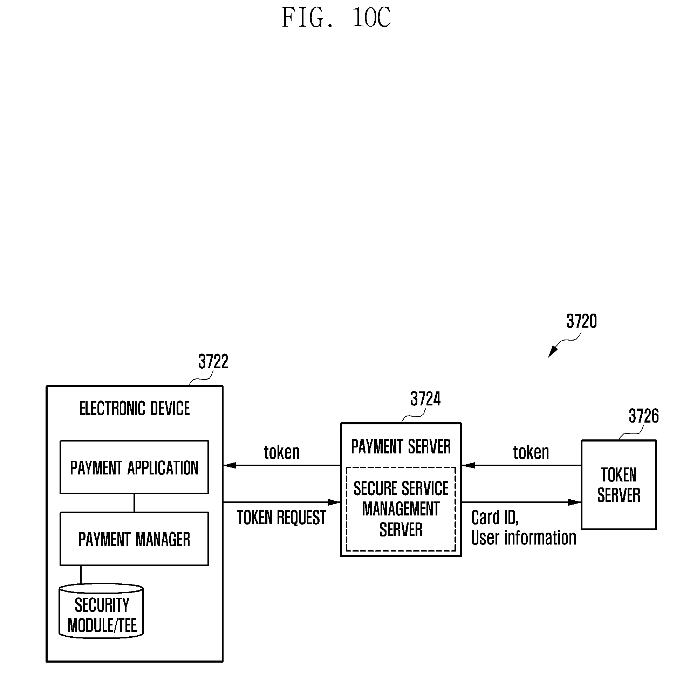

FIG. 10C shows a third token issuance process 3720 for issuing a third token to the electronic device according to various embodiments of the present disclosure.

Referring to FIG. 10C, the third token issuance process may be performed among an electronic device 3722, a payment server 3724, and a token server 3726. The electronic device 3722 may include at least one of a payment application, a payment manager, a security module, and a TEE.

According to various embodiments, the electronic device may acquire the card information by itself or by means of a sensor which is functionally connected to the electronic device. The card information may be used in registering the card. The sensor may include the OCR. The card information may include at least one of PAN, expiration date, and CW. The sensor may acquire the card information using a payment application installed in the electronic device.

According to an embodiment, the electronic device may perform the authentication operation (e.g., ID&V). The authority authentication (e.g., user identification) may be performed by means of the payment application.

According to an embodiment, the electronic device 3722 may perform card registration and/or user identification when the payment function is executed. For example, the electronic device 3722 may perform the card registration and user identification for the payment function, and the card registration and user identification is ready for the payment function.

According to an embodiment, the electronic device 3722, the payment server 3724, and the token server 3726 may share the card registration and user identification information. For example, the electronic device 3722, the payment server 3724, and the token server 3726 may share at least one of the PAN, expiration date, CVV, device information, and user information.

According to an embodiment, the token may be issued (generated) through the third token issuance operation during the payment process of the payment function.

According to various embodiments, the payment application of the electronic device 3722 may perform the user authentication for executing the payment function. For example, the user authentication may be a password authentication, pattern authentication, or biometric information authentication.

According to an embodiment, if the user authentication is successful, the payment application may perform the third token issuance operation. The third token issuance operation may include requesting for a token.

According to an embodiment, the payment server 3724 may send the token server 3726 the card information (e.g., card identifier) and/or user information in response to the token request. The information concerning the electronic device 3722 may include the information on the device requesting for the issuance for the third token.

According to an embodiment, the token server 3726 may issue (generate) the token based on the information received from the payment server 3724.

According to an embodiment, the token server 3726 may transmit the token based on the information received from the payment server 3724.

According to an embodiment, the payment server 3724 may transmit the token to the electronic device 3722.

According to an embodiment, the electronic device 3722 may store the token received from the payment server 3724 in the security module or the TEE. For example, the electronic device may store the token in the secure region such as the security module or the TEE to control the access from the outside.

According to an embodiment, the electronic device 3722 may store the token received from the payment server 3724 in a normal memory (e.g., memory in the REE).

According to an embodiment, the electronic device 3722 may not store the token received from the payment server 3724 in the storage region (e.g., memory) of the electronic device 3722. For example, the electronic device 3722 may execute the payment function without storing the token in the storage region.

According to an embodiment, the storage region of the token may vary depending on the payment scheme (e.g., OTP or call center-based transaction) of the electronic device 3722. The token may be stored in the security module or the TEE for the OTP-based transaction, but it may not be stored in the electronic device 3722 for the call center-based transaction.

According to various embodiments, the token may have an expiry time or validity time. For example, if a predetermined time period (e.g., 3 hours and 1 day) has passed since the issuance (generation) time of the token, the use of the token is limited. According to various embodiments, the token may include the number of uses. For example, if the number of uses (e.g., 3 and 5 times) reaches a predetermined value after the token has been issued, the use of the token is restricted.

According to various embodiments, the token may include the card information. For example, the token may include OTC information.

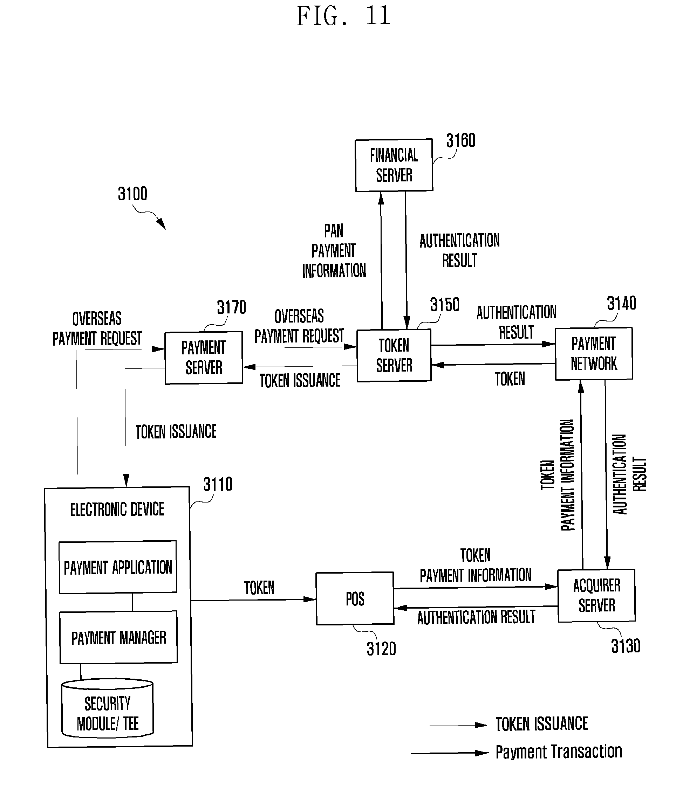

FIG. 11 is a diagram illustrating a token-based payment system 3100 according to various embodiments of the present disclosure.

Referring to FIG. 11, according to various embodiments, the payment system 3100 includes an electronic device 3110, a payment server 3170, a token server 3150, a POS 3120, a financial server 3160, an acquirer server 3130, and a payment network 3140. The electronic device 3110 may include a payment application, a payment manager, and a secure region (e.g., security module and TEE). The POS 3120 may include a POS management system. The POS 3120 includes functions of a cash register and a computing device, and the user may use the POS 3120 to make a payment. The financial server 3160 may be possessed by a bank or a financial company and responsible for user identification. The financial server 3160 may perform authentication on the card during the transaction. The acquirer server 3130 may be possessed by the bank or the financial company that acquires a slip for card transaction paid at the store (e.g., POS 3120). The payment network 3140 may include a card network.

According to various embodiments, the electronic device 3110 may transmit a token and/or password (e.g., cryptogram) to the POS 3120. The token may be stored in the electronic device 3110. The token may be stored in an encrypted region (e.g., security module and TEE). For example, the electronic device 3110 may generate encryption information with a key received from the outside or created by the electronic device 3110. The encryption information may include the cryptogram. The electronic device 3110 may transmit the cryptogram and/or the token to the POS 3120.

According to various embodiments, the electronic device 3110 may use various communication protocols to transmit the token and/or the cryptogram to the POS 3120. Examples of the protocols include an NFC protocol, MS) protocol, a barcode protocol, and a quick response (QR) code protocol.

According to various embodiments, the POS 3120 may send the acquirer server 3130 at least one of the token, the encryption information, and the payment information. For example, the POS 3120 may transmit the token and/or the cryptogram received from the electronic device 3110 and the payment information (e.g., payment details) acquired from the POS 3120 to the acquirer server 3130. The payment information may be received from the POS 3120 or an external device and may include the details of the payment requested by the user. The payment information may also include a history of payments made through the payment system.

According to various embodiments, the acquirer server 3130 may transmit to the payment network 3140 at least one of the token, the encryption information, and the payment information. For example, the acquirer server 3130 may transmit to the payment network 3140 at least one of the token, the cryptogram, and the payment information received from the POS 3120.

According to various embodiments, the payment network 3140 may include a network related to the card company. Examples of the card company include VISA™ MasterCard™, and Amex™. According to an embodiment, the payment server may include and manage the token server 3150. The payment network 3140 may transmit to the token server 3150 at least one of the token, the cryptogram, and the payment information from the payment network or execute the functions of the token server 3150.

According to various embodiments, the token server 3150 may check the information on the token received from the payment network 3140. The token server 3150 may verify the card information (e.g., PAN) corresponding to the token. For example, the token server 3150 may check the PAN corresponding to the financial server 3160 based on the information (e.g., data) included in the token. The token server 3150 may check the PAN corresponding to the financial server 3160 and make a process for the financial server to perform payment authentication with the PAN.

According to various embodiments, the token server 3150 may check the PAN with the cryptogram.

According to various embodiments, the token server 3150 may transmit the PAN to the payment network 3140.

According to various embodiments, the payment network 3140 may transmit the PAN and/or the payment information to the financial server 3160. For example, the payment network 3140 may transmit to the financial server 3160 the PAN and/or the payment information received from the acquirer server 3130.

According to various embodiments, the financial server 3160 may make a payment authentication decision based on the PAN and/or the payment information. For example, the payment server 3170 may authorize the payment when the PAN and/or the payment information matches the information stored in the financial server 3160 (i.e., when the PAN is valid). The financial server 3160 may reject the payment when the PAN and/or the payment information mismatches the information stored in the financial server 3160 (i.e., when the PAN is invalid).

According to various embodiments, the financial server 3160 may transmit the payment authentication result to the payment network 3140.

According to various embodiments, the payment network 3140 may transmit the authentication result to the payment network 3140.

According to various embodiments, the payment server 3170 may transmit the authentication result to the acquirer server 3130.

According to various embodiments, the acquirer server 3130 may transmit the authentication result to the POS 3120.

According to various embodiments, the payment network 3140 may transmit the payment information to the token server 3150 when the authentication is successful.

According to various embodiments, the token server 3150 may transmit the payment information to the payment server 3170.

According to various embodiments, the payment server 3170 may transmit the payment information to the electronic device 3110. For example, the payment server 3170 may transmit the payment information to the electronic device 3110 using a designated command (e.g., push message).

According to various embodiments, the electronic device 3110 may display the payment information. For example, the electronic device 3110 may display the payment information by means of the payment application installed in the electronic device or through an interface concerning the payment function. The payment function interface may include a notification bar.

According to various embodiments, the electronic device 3110 may display the payment information and other information concerning the payment (e.g., payment status, payment history, and accumulated amount) on the display that is functionally connected to the electronic device 3110. For example, the electronic device 3110 may display the payment information and other information concerning the payment by means of a notification module (e.g., notification manager 349 of FIG. 3) of the electronic device 3110. The electronic device 3110 may also present the payment information and the information concerning the payment by means of at least one of a notification bar, an indicator, a state bar, a task bar, an icon, a floating icon, a tile, and a widget displayed on at least part of one of a home screen, a lock screen, and a bended display.

According to various embodiments, the electronic device 3110 may output an alert about the payment information or information concerning the payment in the form of a sound, a vibration, or haptic effect by means of at least one of an audio module (e.g., audio module 280 of FIG. 2), motor (e.g., motor 298 of FIG. 2), a tactile feedback device (not shown), and a friction display (not shown) that are functionally connected to the electronic device 3110.

According to various embodiments, the electronic device 101 may perform wireless communication by means of the communication module. The electronic device 101 may collect and manage the information related to the service by means of various sensors. The electronic device 101 may transmit the information on the settlement terminal (e.g., POS) by means of the communication module (e.g., MST module) for payment.

According to various embodiments, the payment application 612 and/or the payment manager 614 (e.g., Samsung Pay™) may relay communication between the electronic device and the payment server 720 and transmit the location information, device information, and selection information acquired from the electronic device 101 to the service server or the financial server 640. The payment application 612 and/or the payment manager may determine a data processing and transfer protocol (e.g., NFC, MST, barcode, App2App, and QR code) to transmit a one-time card number suitable for the purpose from the payment server 720.

According to various embodiments, the payment server 720 may manage the requirements received from the payment application 612. The payment server 720 may make a card issuance request to the financial server 640 and transfer the received OTC number to the payment application 612.

According to various embodiments, the card issuance server may check the user based on an overseas-use one-time card number request received from the service application or the payment server to determine whether to accept service subscription and the one-time use-overseas card number issuance request and, if it is determined to accept, issue a one-time use-overseas card number with a limited number of uses to the service application or the service server.

According to various embodiments, the card issuance server may update charging/settlement information related to the use of the service for the subscriber or the service provider (Samsung Pay™).

According to various embodiments, the member store settlement terminal (cardholder activated terminal (CAT), POS, or web) or the member store payment server may transmit the user's order information or payment amount input and the one-time use-overseas payment card number to the settlement agent server or the card company authorization server to receive an authorization result and output a receipt for the payment.

According to various embodiments, the acquirer server may check the card information concerning the payment request received from the member store settlement terminal or server to identify the card company, make an authorization request to the card company, receive an authorization result value, and transfer the authorization result value to the member store settlement terminal or server.

According to various embodiments, the financial server (card company authorization server) may determine whether the one-time card number received from the member store settlement terminal, member store settlement server, or the acquirer server matches the information on the card issued by the card company's overseas card issuance server and, if so, authorize the transaction based on the limit of the card and causes of transaction rejection and transmit the authorization result to the member store settlement terminal or server or the settlement agent's server. The financial server may charge the settlement amount or service fee to the user according to the billing process of the card company.

According to various embodiments, the external card network (brand card company server) may issue/manage the company identity number (BIN) capable of overseas transaction and, if there is any transaction request from the member store terminal or server or the settlement agent or the card company, retrieve and transmit the corresponding BIN to the corresponding entity.

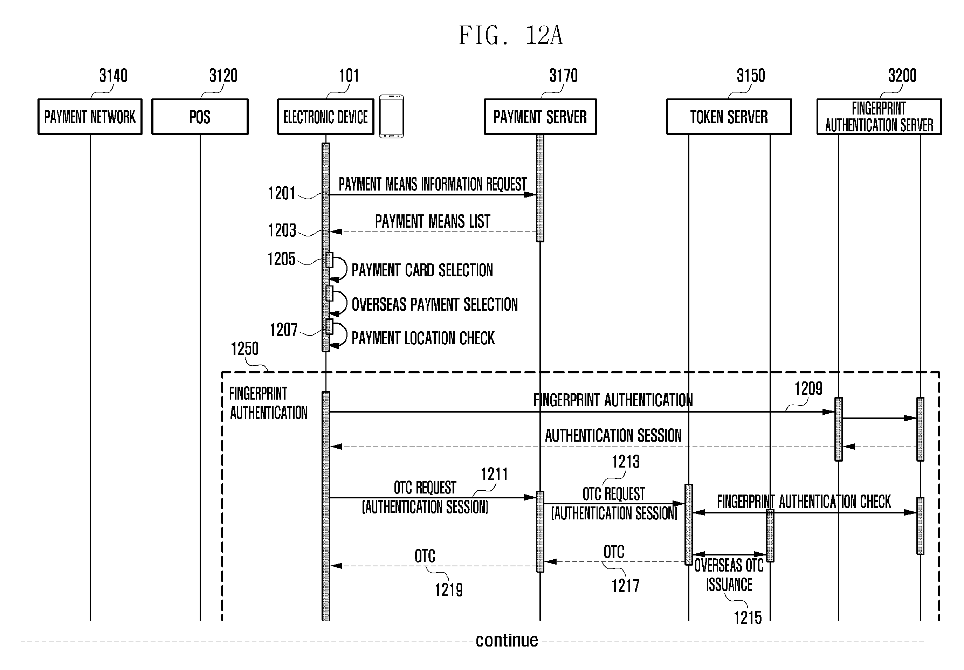

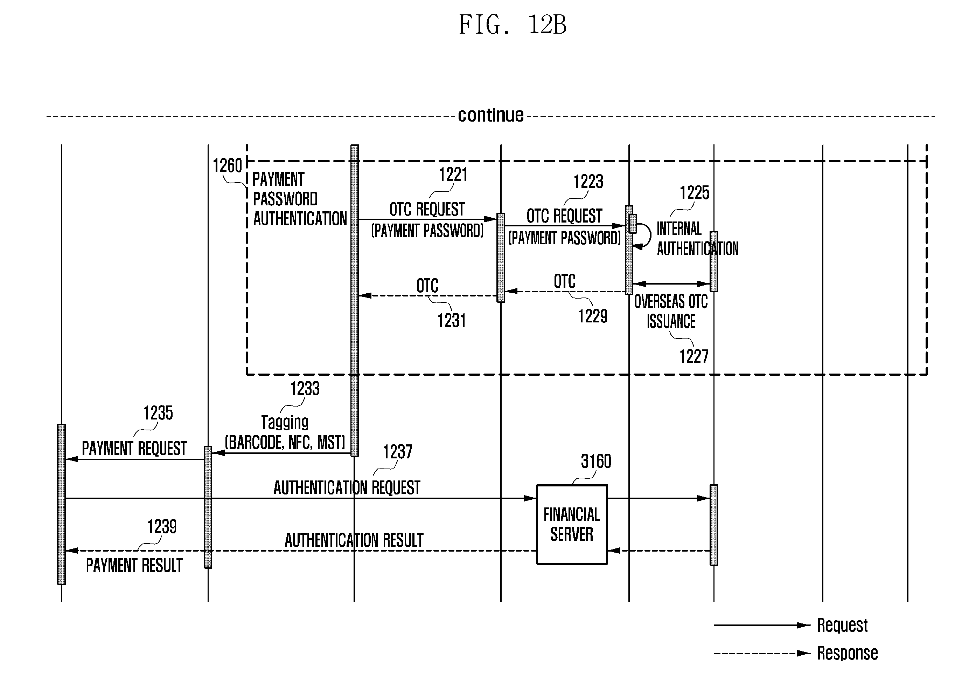

FIGS. 12A and 12B are a signal flow diagram illustrating a payment information processing and payment transaction procedure according to various embodiments of the present disclosure.

Referring to FIGS. 12A and 12B, at operation 1201, the electronic device 101 (e.g., processor 850) may transmit a request to the payment server 3170 for the information about payment means (e.g., token and OTC) by means of the communication module 220. According to various embodiments, the electronic device 101 (e.g., processor 850) may transmit location information when requesting the payment server 3170 for the information on the payment means (e.g., token and OTC).

At operation 1203, the payment server 3170 may transmit a payment means list to the electronic device 101.

At operation 1205, the electronic device 101 may select a payment means (e.g., payment card) according to a user input. According to various embodiments, the electronic device 101 may select an overseas payment means (e.g., overseas token and overseas OTC) according to the user input.

At operation 1207, the electronic device 101 may check the payment location (e.g., location information) using a server.

Reference number 1250 denotes a fingerprint-based payment means issuance process, and reference number 1260 denotes a payment password-based payment means issuance process.

The fingerprint-based payment means issuance process 1250 is described hereinafter.

At operation 1209, the electronic device 101 may transmit a request to a fingerprint authentication server 3200 for fingerprint authentication by means of the payment management module 1831, and the fingerprint authentication server 3200 may complete the fingerprint authentication session.

The electronic device 101 may transmit biometric information (e.g., fingerprint information) to the fingerprint authentication server 3200 in the fingerprint authentication process.

At operation 1211, the electronic device 101 may transmit a request to the payment server 3170 for issuance of payment means or payment means information (e.g., one time use token and OTC). The one time use token may be a payment means configured for use in payment at least one time. For example, the token may be a normal token with valid time period for use.

At operation 1213, the payment server 3170 may transmit a request to the token server 3150 for issuance of payment means or payment means information (e.g., one time use token and OTC).

Upon receipt of the payment means or payment means information request, the token server 3150 may check the fingerprint authentication result from the fingerprint authentication server 3200 and issue the payment means or payment means information based on the check result at operation 1215.

At operation 1217, the token server 3150 may issue the payment means or payment means information via the payment server 3170 in response to the payment means or payment means information issuance request.

At operation 1219, the payment server 3170 may transmit the payment means or payment means information issued by the token server 3150 to the electronic device 101.

The payment password-based payment means issuance process 1260 is described hereinafter.

At operation 1221, the electronic device 101 may transmit a request to the payment server 3170 for issuance of payment means or payment means information (e.g., one-time token and OTC) by means of the communication module 220. According to various embodiments, the electronic device 101 may transmit a payment password to the payment server 3170 when requesting for issuance of the payment means or payment means information.

At operation 1223, the payment server 3170 may transmit a request to the token server 3150 for issuance of payment means or payment means information, e.g., one-time token and OTC). According to various embodiments, the payment server 3170 may transmit a payment password received from the electronic device 101 along with the payment means or payment means information request.

At operation 1225, the token server 3150 may check (e.g., verify) the payment password received along with the payment means or payment means information request.

If the payment password is verified, the token server 3150 may issue payment means or payment means information at operation 1227.

At operation 1229, the token server 3150 may issue the payment means or payment means information in response to the payment means or payment means information issuance request of the payment server 3170 and/or the electronic device 101.

At operation 1231, the payment server 3170 may forward the payment means or payment means information issued by the token server 3150 to the electronic device 101.

Operations 1233, 1235, 1237, and 1239 relate to a payment transaction procedure with the issued payment means or payment means information.

At operation 1233, the electronic device may transmit the issued payment means or payment means information to a store device (e.g., POS 3120). According to various embodiments, the electronic device 101 may transmit the issued payment means or payment means information to the POS or a reading device of the store. The electronic device 101 may transmit the issued token or OTC to another electronic device in various ways (e.g., NFC, MST, barcode, App2App, and QR code).

At operation 1235, the POS 3120 may receive the payment means or payment means information from the electronic device 101. The POS 3120 may check a BIN included in the payment means or payment means information. The POS 3120 may transmit the payment means or payment means information (e.g., token and OTC) to a payment network 3140 (e.g., card network (value added network (VAN)) concerning the verified BIN.

At operation 1237, the payment network 3140 (e.g., card network (VAN)) may transmit a request to the financial server 3160 for authenticating the payment means or payment means information.

At operation 1239, the payment network 3140 (e.g., card network (VAN)) may receive the authentication result of the payment means or payment means information from the financial server 3160.

The electronic device 101 may check the location information (e.g., location of the electronic device 101) collected by a sensor or included in the sensing information. The sensor may collect location information of the electronic device 101 and may include at least one of the communication module 220 and the sensor module 240.

According to various embodiments, the location information checking procedure of the electronic device 101 may include receiving location information as a GPS position and determining the country/area corresponding to the location information (and, in an off-line situation, checking the location and then generating an overseas payment button).

According to various embodiments, the electronic device 101 may check its location based on its roaming state and the currently connected network information.

According to various embodiments, the electronic device 101 may check its location based on the information on the store at which the payment is in progress (e.g., merchant ID and location information of the registered store).

According to various embodiments, if the location is checked, the electronic device 101 may display a UI (e.g., GUI) on the display 160 that is functionally connected to the electronic device to notify the user about overseas payment.

According to various embodiments, the electronic device 101 may transmit a request to the token server 3150 for issuance of a payment means capable of being used at least one time (e.g., token or OTC) based on the location information. According to various embodiments, the electronic device 101 may transmit a request to the token server 3150 for issuance of a payment means capable of being used during a predetermined period or a predetermined number of times based on the location information determination result.

According to various embodiments, the electronic device may receive payment means (e.g., token or OTC) including a BIN of the bank selected based on the location information determination result from the token server 3150. In the overseas payment case, the electronic device 101 may receive a token (e.g., OTC) capable of being used overseas.

According to various embodiments, the electronic device 101 may transmit the issued token (e.g., OTC) to a store device. According to various embodiments, the electronic device 101 may transmit the issued OTC to the POS 3120 or a reader device. The electronic device 101 may transmit the issued payment means (e.g., token and OTC) to another electronic device (e.g., POS 3120) in various ways (e.g., NFC, MST, barcode, App2App, and QR code).

According to various embodiments, the token server 3150 (e.g., OTC issuance server) may receive a token (e.g., OTC) issuance request including the location information determination result from the electronic device. The electronic device 101 may determine whether the payment requires an overseas token (e.g., for USA and Europe) or a domestic token based on the location information and transmit a request to the token server 3150 for issuance of a token (e.g., OTC) according to the determination result. For the case of the overseas payment, the electronic device 101 may provide the user with a corresponding UI and, if the user makes a request for a token (e.g., OTC) through the UI, transmit a token issuance request to the token server 3150. Although the UI is not provided, it may be possible to make a token or OTC issuance request to the token server 3150 by setting a flag in the data requesting for a payment means (e.g., token and OTC).

According to various embodiments, the token server 3150 may select a BIN based on the location information determination result. For example, the overseas BIN and domestic BIN may differ from each other. The token server 3150 may issue a payment means (e.g., token and OTC) based on the BIN. According to various embodiments, the token server 3150 may transmit the issued token (e.g., token and OTC) to the electronic device 101.

According to various embodiments, the POS 3120 and/or the acquirer server 3130 (e.g., payment agent server) may receive the token (e.g., OTC) or token information (e.g., OTC information) from the electronic device 101. The POS 3120 and/or acquirer server 3130 (payment agent server) may check the BIN included in the token (e.g., OTC). The POS 3120 and/or acquirer server 3130 (payment agent server) may transmit the token (e.g., OTC) or token information (e.g., OTC information) to the payment network 3140 (e.g., card network (VAN)) concerning the checked band.

According to various embodiments, the payment network 3140 (e.g., card network, i.e., VAN) may check the BIN and then transmit the token (e.g., OTC) or token information (e.g., OTC information) to the financial server 3160 (e.g., issuer, bank, and card company).

According to various embodiments, the POS 3120 and/or acquirer server 3130 (e.g., payment agent server) may check an overseas payment from the payment network 3140 (e.g., card network (VAN)) and transmit a request to a domestic agent for a token (e.g., OTC) or token information (e.g., OTC information).

According to various embodiments, the payment network 3140 (e.g., card network (VAN)) may check only the BIN in an overseas token payment transaction and transmit the corresponding token (e.g., OTC) to the domestic card company. According to various embodiments, the payment network 3140 (e.g., card network (VAN)) may verify the token (e.g., OTC).

According to various embodiments, the electronic device may collect area information by means of a sensor or from the sensing information.

According to various embodiments, the electronic device 101 may receive location information corresponding to a GPS position and acquire the area information based on the location information.

According to various embodiments, the electronic device 101 may check its roaming state and collect area information based on the check result.

According to various embodiments, the electronic device 101 may collect the area information based on the merchant ID or information on the merchant registered by means of the merchant ID. According to various embodiments, the electronic device 101 may transmit a request to the token server 3150 for the collected area information (e.g., location information) and issuance of a token for use at least one time (e.g., OTC).

According to various embodiments, the token server 3150 may issue the electronic device 101 a token including the BIN selected based on the area information (e.g., location information and the one-time use token (e.g., OTC) request). For example, the electronic device 101 may receive a token (e.g., OTC) issued for use overseas.

According to various embodiments, the electronic device 101 may transmit the issued token (e.g., OTC) to a store device (e.g., POS 3210). According to various embodiments, the electronic device 101 may transmit the issued token (e.g., OTC) to the POS 3210 or a reader device of the store. The electronic device 101 may transmit the issued token (e.g., OTC) to another electronic device in various ways (e.g., NFC, MST, barcode, App2App, and QR code).

According to various embodiments, the token server 3150 (e.g., OTC issuance server) may receive a request for area information (e.g., location information) and issuance of a token (e.g., OTC) from the electronic device 101. The token server 3150 may determine whether to issue an overseas token (for use in the USA, Europe, etc.) or a domestic token (e.g., OTC) based on the area information (e.g., location information). The token server 3150 may select a BIN based on the area information (e.g., location information).

According to various embodiments, the token server 3150 may select a BIN based on the area information (e.g., location information) determination result. For example, the overseas BIN and domestic BIN may differ from each other.

According to various embodiments, the token server 3150 may select the BIN based on the information on the internal policy (e.g., numbers of tokens allowed for Visa™ and MasterCard™ and handling fee policy). The token server 3150 may generate a token (e.g., OTC) based on the BIN. According to various embodiments, the token server 3150 may transmit the issued token (e.g., OTC) to the electronic device 101.

According to various embodiments, the store server (e.g., POS) and/or acquirer server 3130 (payment agent server) may receive the token (e.g., OTC) or token information (e.g., OTC information) from the electronic device 101. The electronic device 101 may transmit the token (e.g., OTC) or token information (e.g., OTC information) to the store server and/or acquirer server 3130 (e.g., payment agent server) via a network. In the case that the token (e.g., OTC) or token information (e.g., OTC information) is delivered to the store server and/or acquirer server 3130 (e.g., payment agent server) online, the electronic device 101 may encrypt the token (e.g., OTC) or token information (e.g., OTC information). The store server and/or acquirer server 3130 (payment agent server) may check the BIN included in the token (e.g., OTC). The store server and/or acquirer server 3130 (payment agent server) may transmit the token (e.g., OTC) or token information (e.g., OTC information) to the payment network 3140 (e.g., card network (VAN)) concerning the checked BIN. According to various embodiments, the electronic device 101 may collect (acquire) the area information (e.g., location information). The collected area information may be transmitted to the payment server 3170. The payment server 3170 may transmit to the electronic device 101 the information on the recommendation of the payment means information (e.g., token, OTC, and OTC information) according to the purpose based on the area information.

The electronic device 101 may receive the information on the recommendation of the payment means information (e.g., token, OTC, and OTC information) and display the received information on the UI. If the user selects a payment means (e.g., token, OTC, and OTC information) in the payment means information displayed on the UI, the electronic device 101 may transmit a request to the token server 3150 for issuance of the selected token or OTC card.

According to various embodiments, the electronic device 101 may receive the recommended payment means information (e.g., token, OTC, and OTC information) including a BIN from the token server 3150. For example, a big box store or a corner store may have an affiliation card. Thus, if the electronic device 101 acquires the area information (e.g., location information) and transmits the acquired area information (e.g., location information) to the payment serer 3170, the payment server 3170 may recommend the affiliation card based on the area information (e.g., location information). If the user selects the recommended affiliation card, the electronic device 101 may receive payment means information (e.g., token, OTC, and OTC information) issued in association with the affiliation card recommended by the token server 3150.

According to various embodiments, the token server 3150 (e.g., OTC issuance server) may receive a request for issuance of the recommended payment means information (e.g., token, OTC, and OTC information) from the electronic device 101. The token server 3150 may generate the payment means information (e.g., token, OTC, and OTC information) based on the BIN. According to various embodiments, the token server 3150 may transmit the generated payment means information (e.g., token, OTC, and OTC information) to the electronic device 101.

According to various embodiments, the electronic device may determine whether recommended payment means information (e.g., token, OTC, and OTC information) is required based on the area information (e.g., location information) and transmit a request to the token server 3150 for issuance of the payment means information (e.g., token, OTC, and OTC information).

According to various embodiments, if the area information (e.g., location information) is checked, the electronic device 101 may present the recommended payment means information (e.g., token, OTC, and OTC information) to the user using a UI (e.g., GUI) on the display 160 that is functionally connected to the electronic device 101.

According to various embodiments, the electronic device 101 may transmit the area information (e.g., location information) and a request for issuance of payment means information (e.g., token, OTC, and OTC information) to the token server 3150. The token server 3150 may issue the payment means information (e.g., token, OTC, and OTC information) to the electronic device 101 based on the area information and the request for issuance of payment means information (e.g., token, OTC, and OTC information) that are received from the electronic device.

According to various embodiments, the electronic device 101 may request to the token server 3150 for issuance of payment means information (e.g., token, OTC, and OTC information) including the area information determination result.

According to various embodiments, the electronic device 101 may transmit to the token server 3150 the request for issuance of the payment means information capable of being used during a predetermined time period or a predetermined number of times based on the area information determination result.

According to various embodiments, the token server 3150 (e.g., OTC issuance server) may receive the request for issuance of the recommended payment means information (e.g., token, OTC, and OTC information) from the electronic device 101.

According to various embodiments, the token server 3150 may generate the payment means information (e.g., token, OTC, and OTC information) based on the information on the recommended payment means information (e.g., token, OTC, and OTC information). According to various embodiments, the token server 3150 may transmit the payment means information (e.g., token, OTC, OTC information) to the electronic device 101.

According to various embodiments, the electronic device 101 may transmit a request to the token server 3150 for issuance of the recommended token or OTC based on the area information.

According to various embodiments, the electronic device 101 may transmit the issued payment means information (e.g., token, OTC, and OTC information) to the store device (e.g., POS 3120). According to various embodiments, the electronic device 101 may transmit the issued payment information (e.g., token, OTC, and OTC information) to the POS 3120 or a reader device. The electronic device 101 may transmit the issued OTC to another electronic device in various ways (e.g., NFC, MST, barcode, App2App, and QR code).

According to various embodiments, the electronic device 101 may receive the information on the recommendation of the payment means information (e.g., token, OTC, and OTC information) according to a purpose.

The electronic device 101 may receive the information on the recommendation of the payment means information (e.g., token, OTC, and OTC information) and display the information on the UI. If the user selects the information on the recommendation of the payment means information (e.g., token, OTC, and OTC information) on the UI, the electronic device 101 may transmit to the token server 3150 a request for issuance of the recommended payment means information (e.g., token, OTC, and OTC information).

According to various embodiments, the electronic device 101 may receive the payment means information (e.g., token, OTC, and OTC information) including a BIN from the token server 3150. According to various embodiments, the electronic device 101 may store the payment means information (e.g., token, OTC, and OTC information) including the BIN in the memory 230.

According to various embodiments, the token server 3150 (e.g., OTC issuance server) may receive a request for issuance of the recommended payment means information (e.g., token, OTC, and OTC information) from the electronic device 101. The token server 3150 may generate the payment means information (e.g., token, OTC, and OTC information) based on the BIN. According to various embodiments, the token server may transmit the payment means information (e.g., token, OTC, and OTC information) to the electronic device 101.

According to various embodiments, if a message is received from the token server 3150 or POS 3120 notifying that the payment information transmission (transaction) has been completed, the electronic device 101 (e.g., processor 850) may discard the payment means information. According to various embodiments, the electronic device 101 (e.g., processor 850) may delete the payment means information from the memory 230 when discarding the payment means information.

According to various embodiments, the electronic device 101 (e.g., processor 850) may be configured to discard the payment means information when a predetermined time period elapses or a predetermined number of times of use is consumed completely.

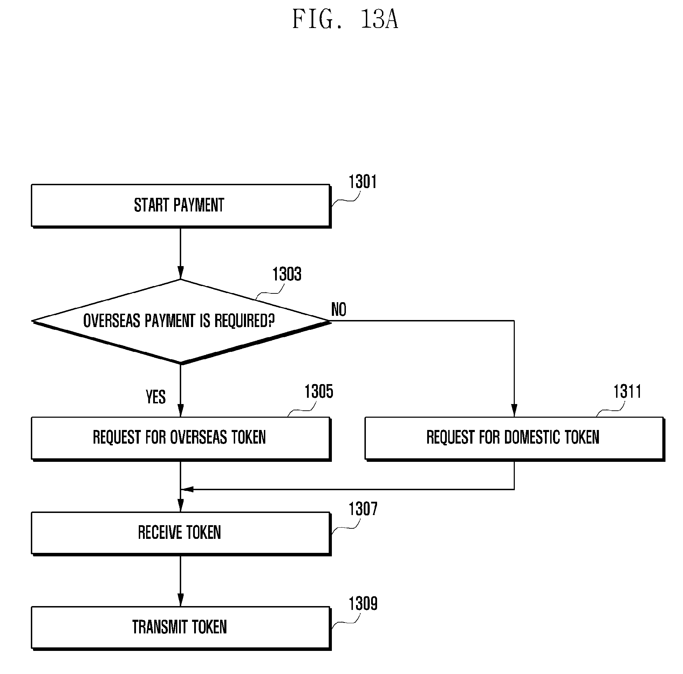

FIGS. 13A to 13C are flowcharts illustrating payment information handling procedures according to various embodiments of the present disclosure.

Referring to FIGS. 13A to 13C, at operation 1301, the electronic device 101 (e.g., processor 850) may start payment operation using the payment application (e.g., payment application 1830).

According to various embodiments, the processor 850 may start payment procedure using the payment application 1830 at operation 1310.

At operation 1303, the electronic device 101 (e.g., processor 850) may determine whether an overseas payment process is required based on the area information or location information.

According to various embodiments, the processor 850 determines whether an overseas payment process is required based on the area information or location information at operation 1303.

The electronic device 101 may collect the area information or location information of the electronic device 101 using a sensor. The sensor may collect the location information of the electronic device 101. For example, the sensor may include at least one of the communication module 220 and the sensor module 240.

If it is determined that the area information-based or location information-based overseas payment process is required, the electronic device 101 (e.g., processor 850) may transmit a request to the token server 3150 and payment server 3170 for issuance of an OTC including at least one overseas token.

According to various embodiments, if it is determined that overseas payment is required based on the area information or location information, the processor 850 may transmit a request to the payment server 3170 for issuance of an OTC including an overseas token at operation 1305.

According to various embodiments, if a request for issuance of an OTC including an overseas token is received from the electronic device 101, the payment server 3170 may transmit a request to the token server 3150 for issuance of the OTC.

According to various embodiments, the token server 3150 may issue an OTC including an overseas token via the payment server 3170 in response to the OTC issuance request. The payment server 3170 may forward the OTC including the overseas token that is received from the token server 3150 to the electronic device 101.

If it is determined that overseas payment is not required based on the area information or location information, the electronic device 101 (e.g., processor 850) may transmit a request to the token server 3150 for issuance of an OTC including a domestic token, at operation 1311.

According to various embodiments, if it is determined that overseas payment is not required based on the area information or location information, the processor 850 may transmit a request to the token server 3150 for issuance of an OTC including a domestic token.

According to various embodiments, in case of receiving a request from the electronic device 101 for issuance of an OTC that includes a domestic token, the payment server 3170 may transmit a request to the token server 3150 for issuance of an OTC according to the OTC issuance request received from the electronic device 101.

According to various embodiments, the token server 3150 may issue an OPT including a domestic token via the payment server 3170 in response to an OTP issuance request. The payment server 3170 may send the electronic device 101 the OTC including the domestic token received from the token server 3150.

At operation 1307, the electronic device 101 (e.g., server interoperation module 1833) may receive an OTC including an overseas or domestic token from the payment server 3170 or token server 3150.

According to various embodiments, the server interoperation module 1833 may receive an OTC including an overseas or domestic token from the payment server 3170 or token server 3150 under the control of the processor 850.

At operation 1309, the electronic device 101 (e.g., MST control module 830 and NFC control module 840) may transmit an OTC including an overseas or domestic token to the POS 3120.

According to various embodiments, at least one of the MST control module 830, the NFC control module 840, and the communication module 220 may transmit an OTC including a token to the POS 3120 during the payment transaction under the control of the processor 850.

According to various embodiments, the electronic device 101 may store the recommended payment means information (e.g., token, OTC, and OTC information) including a BIN in the memory 230.

According to various embodiments, if a message is received from the token server 3150 or POS 3120 notifying that the payment information transmission (transaction) has been completed, the electronic device 101 (e.g., processor 850) may discard the payment means information. According to various embodiments, the electronic device 101 (e.g., processor 850) may delete the payment means information from the memory 230 when discarding the payment means information.

According to various embodiments, the electronic device 101 (e.g., processor 850) may be configured to discard the payment means information when a predetermined time period elapses or a predetermined number of times of use is consumed completely.

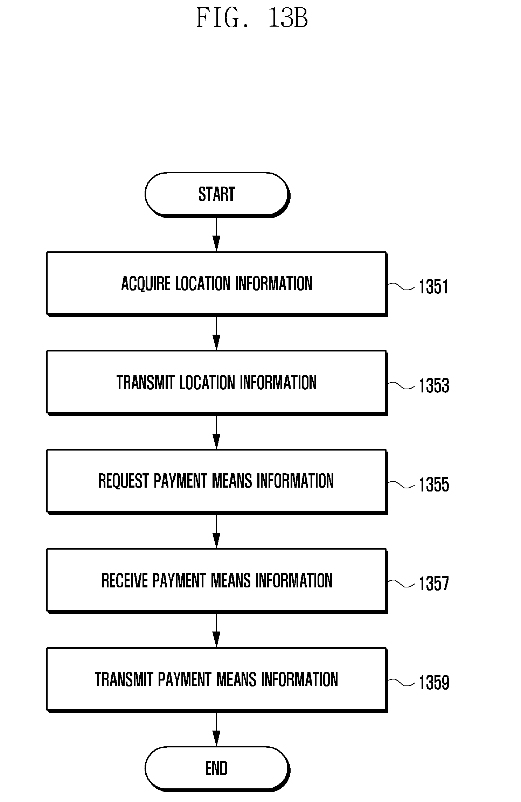

FIG. 13B is a flowchart illustrating a payment means issuance and payment transaction procedure of the electronic device 101 according to various embodiments of the present disclosure.

At operation 1351, the electronic device 101 (e.g., processor 850) may acquire location information. The electronic device 101 may acquire the location information by means of a sensor. The sensor may include at least one of the communication module 220 and the sensor module 240 capable of collection location information of the electronic device 101.

At operation 1353, the electronic device 101 (e.g., processor 850) may transmit the collected location information to the payment server 3170 by means of the communication module 220.

According to various embodiments, the payment server 3170 may transmit the information on the recommendation of purpose-specific payment means information (e.g., token, OTC, and OTC information) to the electronic device 101 based on the area information. The electronic device may receive the information on the recommendation of the purpose-specific payment means information (e.g., token, OTC, and OTC information) from the payment server 3170 by means of the communication module 220.

According to various embodiments, the electronic device 101 (e.g., processor 850) may display the information on the recommendation of the purpose-specific payment means information (e.g., token, OTC, and OTC information) on the UI (e.g., display 160).

At operation 1355, the electronic device 101 (e.g., processor 850) may transmit a request for issuance of recommended payment means information (e.g., token, OTC, and OTC information) to at least one of the payment server 3170 and the token server 3150 by means of the communication module 220. According to various embodiments, the electronic device 101 (e.g., processor 850) may transmit a request for issuance of the payment means information (e.g., token, OTC, and OTC information) and transmit the collected location information to at least one of the payment server 3170 and token server 3150 at operations 1353 and 1355.

If the user selects a payment means according to the information on the recommendation of the payment means information (e.g., token, OTC, and OTC information) displayed on the UI, the electronic device 101 may transmit a request for issuance of the recommended payment means information (e.g., token, OTC, and OTC information) to the token server 3150.

According to various embodiments, the electronic device 101 may receive the recommended payment means information (e.g., token, OTC, and OTC information) including the BIN from the token server 3150. For example, a big box store or a corner store may have an affiliation card. Thus, if the electronic device 101 acquires the area information (e.g., location information) and transmits the acquired area information (e.g., location information) to the payment server 3170, the payment server 3170 may recommend the affiliation card based on the area information (e.g., location information). If the user selects the recommended affiliation card, the electronic device 101 may receive payment means information (e.g., token, OTC, and OTC information) issued in association with the affiliation card recommended by the token server 3150.

At operation 1357, the electronic device 101 (e.g., processor 850) may receive payment means information (e.g., token, OTC, and OTC information) from at least one of the payment server 3170 and the token server 3150 by means of the communication module 220.

According to various embodiments, the token server 3150 (e.g., token issuance server or OTC issuance server) may receive a request for issuance of payment means information (e.g., token, OTC, and OTC information) from the electronic device. The token server 3150 may generate the payment means information (e.g., token, OTC, and OTC information) based on the BIN. According to various embodiments, the token server 3150 may transmit the generated payment means information (e.g., token, OTC, and OTC information) to the electronic device 101.

According to various embodiments, the electronic device 101 may transmit the area information (e.g., location information) and a request for issuance of payment means information (e.g., token, OTC, and OTC information) to the token server 3150. The token server 3150 may issue to the electronic device 101 the payment means information (e.g., token, OTC, and OTC information) based on the area information and the request for the issuance of the payment means information (e.g., token, OTC, and OTC information) that are received from the electronic device 101.

At operation 1359, the electronic device 101 may transmit the issued payment means information (e.g., token, OTC, and OTC information) to the store device (e.g., POS 3120). According to various embodiments, the electronic device 101 may transmit the issued payment means information (e.g., token, OTC, and OTC information) to the POS 3120 or a reader device of the store. The electronic device 101 may transmit the issued payment means information (e.g., token, OTC, and OTC information) to another electronic device in various ways (e.g., NFC, MST, barcode, App2App, and QR code).

According to various embodiments, the electronic device 101 may store the recommend payment means information (e.g., token, OTC, and OTC information) including a BIN in the memory 230.

According to various embodiments, if a message is received from the token server 3150 or POS 3120 notifying that the payment information transmission (transaction) has been completed, the electronic device 101 (e.g., processor 850) may discard the payment means information. According to various embodiments, the electronic device 101 (e.g., processor 850) may delete the payment means information from the memory 230 when discarding the payment means information.

According to various embodiments, the electronic device 101 (e.g., processor 850) may be configured to discard the payment means information when a predetermined time period elapses or a predetermined number of times of use is consumed completely.

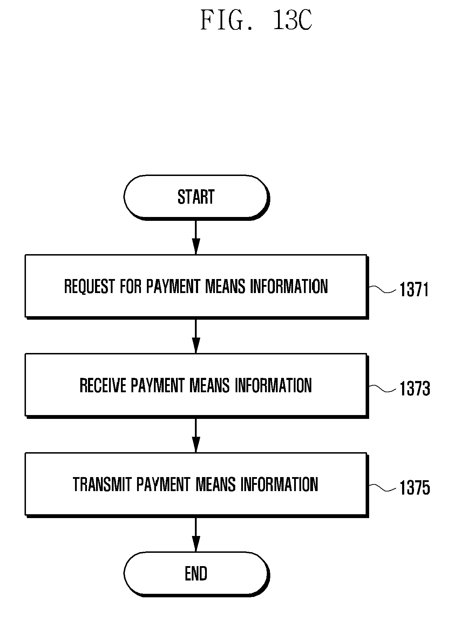

FIG. 13C is a flowchart illustrating a payment means issuance and payment transaction procedure of the electronic device 101 according to various embodiments of the present disclosure.

At operation 1371, the electronic device 101 (e.g., processor 850) may transmit a request for issuance of recommended payment means information (e.g., token, OTC, and OTC information) to at least one of the payment server 3170 and the token server 3150 by means of the communication module 220.

According to various embodiments, the payment server 3170 may transmit the information on the recommendation of purpose-specific payment means information (e.g., token, OTC, and OTC information) to the electronic device 101. The electronic device 101 may receive the information on the recommendation of the purpose-specific payment means information (e.g., token, OTC, and OTC information) from the payment server 3170 by means of the communication module 220.

According to various embodiments, the electronic device 101 (e.g., processor 850) may display the information on the recommendation of the purpose-specific payment means information (e.g., token, OTC, and OTC information) on the UI (e.g., display 160).

According to various embodiments, the electronic device 101 (e.g., processor 850) may transmit a request for issuance of the payment means information (e.g., token, OTC, and OTC information) and transmit the collected location information to at least one of the payment server 3170 and token server 3150 at operation 1371.

If the user selects a payment means according to the information on the recommendation of the payment means information (e.g., token, OTC, and OTC information) displayed on the UI, the electronic device 101 may transmit a request for issuance of the recommended payment means information (e.g., token, OTC, and OTC information) to the token server 3150. It is possible for the UE to make a touch input to select the payment means.

According to various embodiments, the electronic device 101 may receive the recommended payment means information (e.g., token, OTC, and OTC information) including the BIN from the token server 3150. For example, a big box store or a corner store may have an affiliation card. Thus, if the electronic device 101 acquires the area information (e.g., location information) and transmits the acquired area information (e.g., location information) to the payment server 3170, the payment server 3170 may recommend the affiliation card based on the area information (e.g., location information). If the user selects the recommended affiliation card, the electronic device 101 may receive payment means information (e.g., token, OTC, and OTC information) issued in association with the affiliation card recommended by the token server 3150.

At operation 1373, the electronic device 101 (e.g., processor 850) may receive payment means information (e.g., token, OTC, and OTC information) from at least one of the payment server 3170 and the token server 3150 by means of the communication module 220.

According to various embodiments, the token server 3150 (OTC issuance server) may receive a request for issuance of payment means information (e.g., token, OTC, and OTC information) from the electronic device. The token server 3150 may generate the payment means information (e.g., token, OTC, and OTC information) based on the BIN. According to various embodiments, the token server 3150 may transmit the generated payment means information (e.g., token, OTC, and OTC information) to the electronic device 101.

According to various embodiments, the electronic device 101 may transmit a request for issuance of payment means information (e.g., token, OTC, and OTC information) to the token server 3150. The token server 3150 may issue the payment means information (e.g., token, OTC, and OTC information) to the electronic device 101 based on the request for issuance of the payment means information (e.g., token, OTC, and OTC information) that is received from the electronic device.

At operation 1375, the electronic device 101 may transmit the issued payment means information (e.g., token, OTC, and OTC information) to the store device (e.g., POS 3120). According to various embodiments, the electronic device 101 may transmit the issued payment means information (e.g., token, OTC, and OTC information) to the POS 3120 or a reader device of the store. The electronic device 101 may transmit the issued payment means information (e.g., token, OTC, and OTC information) to another electronic device in various ways (e.g., NFC, MST, barcode, App2App, and QR code).

According to various embodiments, the electronic device 101 may store the recommended payment means information (e.g., token, OTC, and OTC information) including the BIN in the memory 230.

According to various embodiments, if a message is received from the token server 3150 or POS 3120 notifying that the payment information transmission (transaction) has been completed, the electronic device 101 (e.g., processor 850) may discard the payment means information. According to various embodiments, the electronic device 101 (e.g., processor 850) may delete the payment means information from the memory 230 when discarding the payment means information.

According to various embodiments, the electronic device 101 (e.g., processor 850) may be configured to discard the payment means information when a predetermined time period elapses or a predetermined number of times of use is consumed completely.

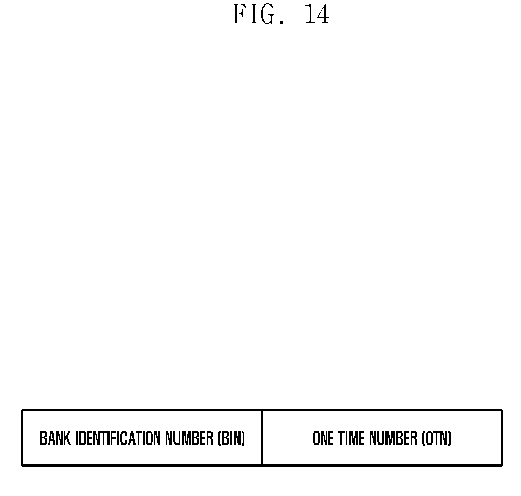

FIG. 14 is a diagram illustrating a structure of a token or OTC according to various embodiments of the present disclosure.

According to an embodiment, the BIN may be a number for use in identifying a bank or a card company such that the card network can determine a financial server to which the corresponding token has to be transmitted. For example, the BIN may be a 6-digit number.

According to an embodiment, the one-time number (OTN) may be a number selected from a one-time card number table and may be provided in the form of an information field consisting of 6 or more bits. The OTN may be a number stored in the one-time card number table by referencing the target address assigned in the index table of the payment device.

According to an embodiment, the OTN may be a number which the token server generates using an OTN generation algorithm.

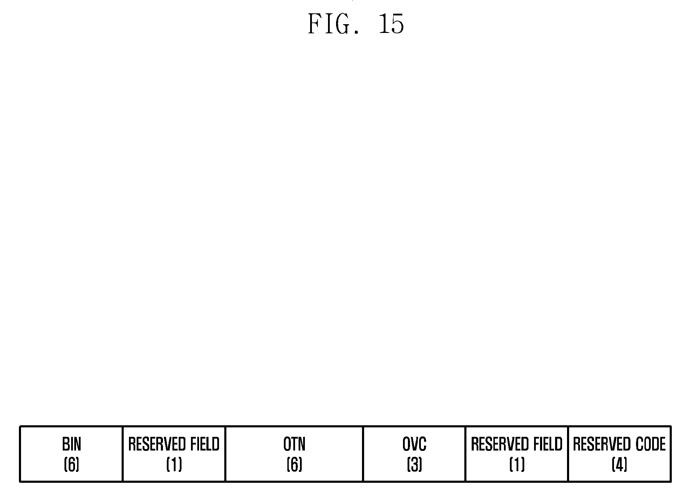

FIG. 15 is a diagram illustrating a structure of an OTC according to various embodiments of the present disclosure.

The one time code verification code (OVC) may be a value for verifying the OTN and may be generated, in response to a one-time card number request, by a secure hash algorithm (SHA) with an input value such as the information on the time when the payment device requests for a one-time card number, identifier of the payment device (e.g., UUID, MAC address, and a phone number), part of a plastic credit card number, and an ascending order value. Here, the ascending order value may be a value that increases by +1 whenever an OVC is generated, and the initial value may be set to an arbitrary value by a system designer. The SHA may be characterized in that different input values do not output the same value. Using the SHA, the different input values always produce different output values.

A reserved code may be included in the supplementary service or alliance card information. The OTN may not be the original card information but an arbitrary digit string corresponding to the real card number, and a 4-digit reserved code may be required to present extra alliance card information or supplementary service information.

The supplementary service may be provided with various types of cards for accumulating points or preserving a certain amount of money such as OK Cash Back™ card, and the reserved code may indicate the type of the card and the type of the services related to the corresponding card. The reserved code may also store the information on the alliance card for refunding part of the payment amount to the user.

A reserved field may be placed between the OVC and the reserved code. The reserved field may be used to extend the primary code from 4 digits to 5 digits when more digits are required to indicate the supplementary service or alliance card information. That is, the reserved code can be extended from a 4-digit field to a 5-digit field. The last part of the OVC may be configured to meet the ISO check digit rule.

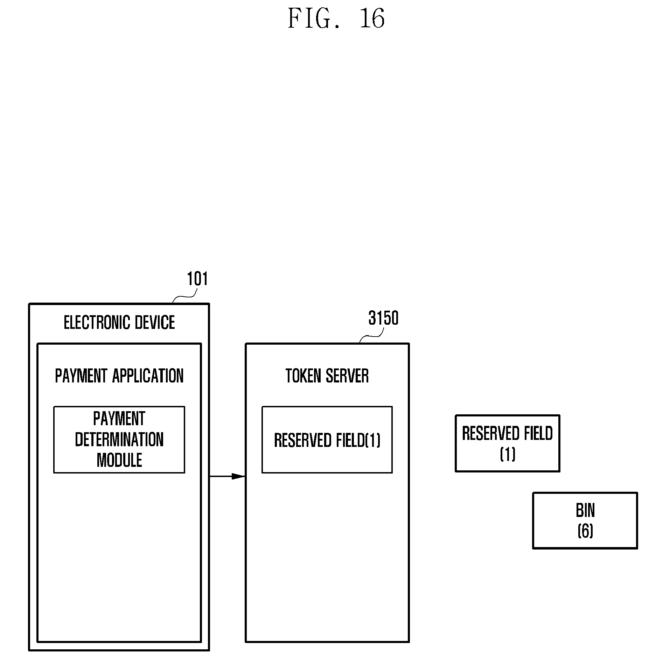

FIG. 16 is a diagram illustrating configurations of the electronic device and token server according to various embodiments of the present disclosure.

Referring to FIG. 16, the payment application of the electronic device 101 may include a payment determination module and may transmit a request to the token server (e.g., token server 3150 of FIG. 11) for a token or an OTC based on the area information. The token server 3150 may generate a token or an OTC according to the token or OTC request.

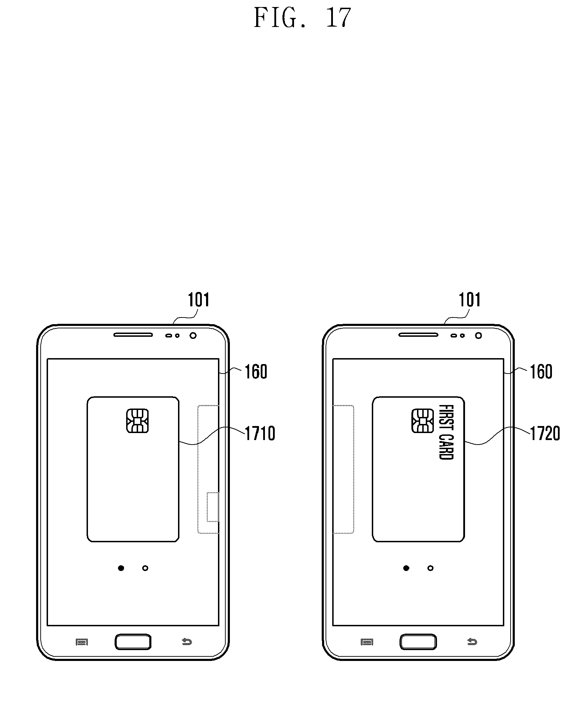

FIG. 17 is a diagram illustrating a UI for presenting a token or a one-time card according to various embodiments of the present disclosure.

Referring to FIG. 17, if the token or OTC is received from the token server, the electronic device 101 may change the old card UI 1710 to a new card UI 1720, which is configured based on the OTC received from the token server on the display 160.

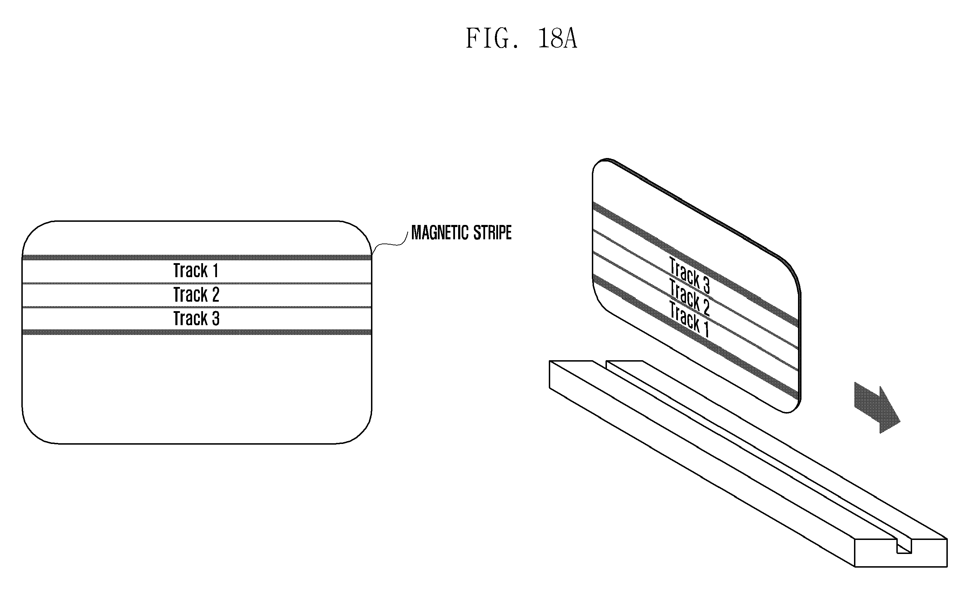

FIGS. 18A to 18H are diagrams for explaining the configuration of the token or OTC according to various embodiments of the present disclosure.

Referring to FIG. 18A, a card reader (e.g., POS) may measure the electric field change induced while the magnetic stripe of the card which stores the card information passes through a coil of wire and converts the electric field change to an electric signal to acquire the information.

According to various embodiments, the magnetic stripe of the card may have one or more tracks. The magnetic stripe may store the information on tracks 1, 2, and 3 and use the information stored on track 2 for payment.

According to various embodiments, the token or OTC may have at least one track for storing information.

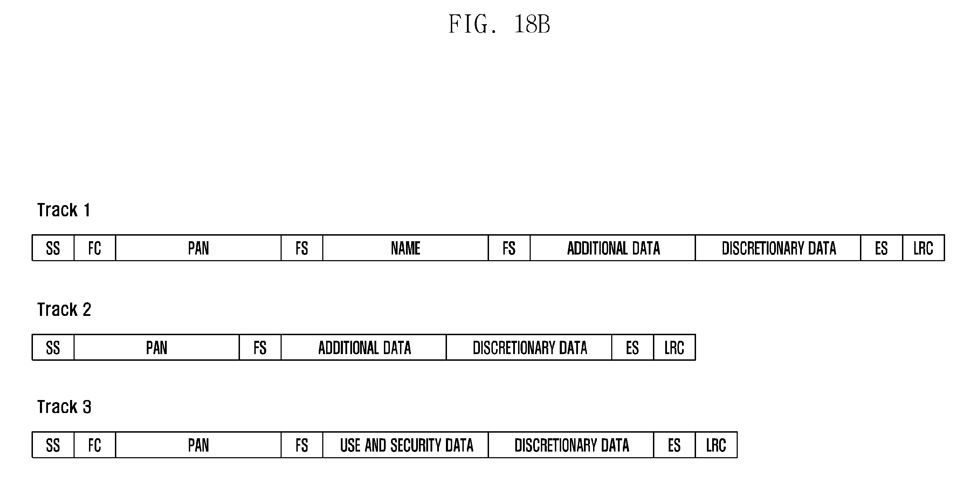

Referring to FIG. 18B, track 1 may store an English name and have a storage space of 79 kb. Track 2 may store the credit card number, issuance date, and expiration date, and it may have a storage space of 40 kb. Track 3 may store the bank account information and supplementary service information.

In FIG. 18B, track 1 may store bank account information and have a storage space of 79 kb. Track 2 may store the credit card number, issuance date, and expiration date, and it may have a storage space of 40 kb. Track 3 may store the alliance company information.

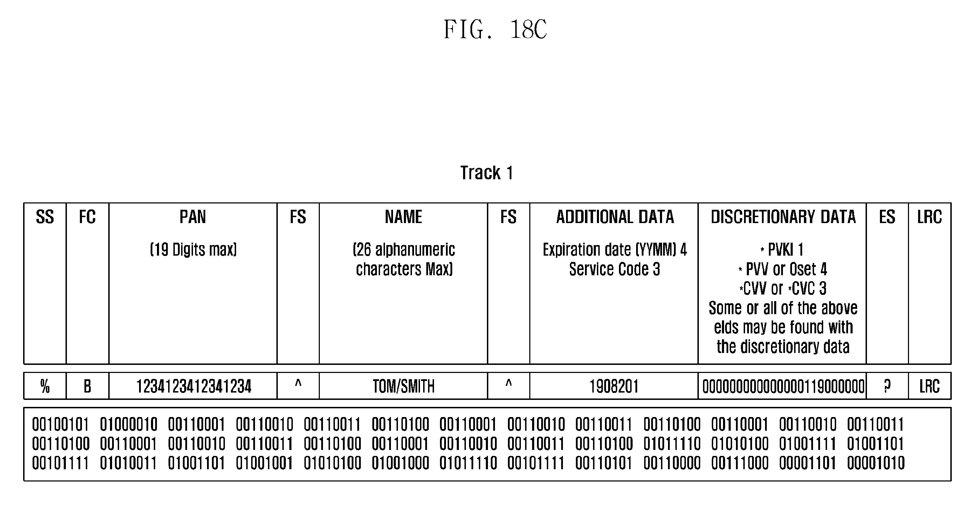

Track 1 may store the following information as shown in FIG. 18C.
SS: Start sentinel - one character (e.g., '%')
FC: Format Code "B" - one character (only alphabet)
PAN: Primary Account Number - up to 19 characters. Usually, but not always, matches the credit card number printed on the front of the card.
FS: Field Separator - (e.g., '^')
NAME: Name - 2 to 26 characters
FS: Field Separator - one character (e.g., '^')
ADDITIONAL DATA: Expiration date - four characters in the form of YYMM, Service code) - three characters
DISCRETIONARY DATA: Discretionary data may include Pin Verification Key Indicator (PVKI, 1 character), PIN Verification Value (PVV, 4 characters), and Card Verification Value or Card Verification Code (CVV or CVC, 3 characters)
ES: End sentinel - one character (e.g., '?')
LRC: Longitudinal redundancy check (LRC) - it is one character and a validity character calculated from other data on the track.

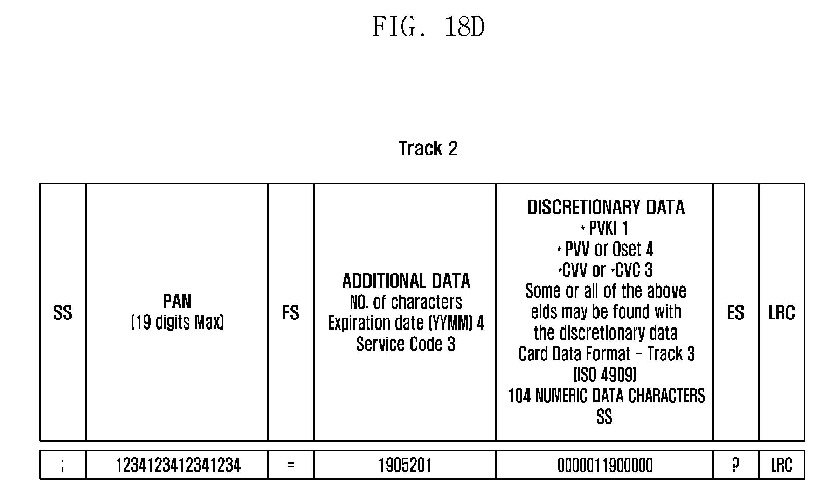

Track 2 may store the following information as shown in FIG. 18D.
SS: Start sentinel -one character, e.g., ';'
PAN: PAN -up to 19 characters. Usually, but not always, matches the credit card number printed on the front of the card.
FS: Field Separator - one character, e.g., '='
Expiration date - four characters in the form of YYMM
Service code - three characters. The first digit specifies the interchange rules, the second specifies authorization processing, and the third specifies the range of services.

DISCRETIONARY DATA may be identical with that of Track 1.
ES: End sentinel - one character, e.g., '?'
LRC: Longitudinal redundancy check - it is one character and a validity character calculated from other data on the track. Most reader devices do not return this value when the card is swiped to the presentation layer and use it only to verify the input internally to the reader.

Service code values common in financial cards:
First digit
   1: International interchange OK
   2: International interchange, use IC (chip) where feasible
   5: National interchange only except under bilateral agreement
   6: National interchange only except under bilateral agreement, use IC (chip) where feasible
   7: No interchange except under bilateral agreement (closed loop)
   9: Test
Second digit
   0: Normal
   2: Contact issuer via online means
   4: Contact issuer via online means except under bilateral agreement
Third digit
   0: No restrictions, PIN required
   1: No restrictions
   2: Goods and services only (no cash)
   3: ATM only, PIN required
   4: Cash only
   5: Goods and services only (no cash), PIN required
   6: No restrictions, use PIN where feasible
   7: Goods and services only (no cash), use PIN where feasible

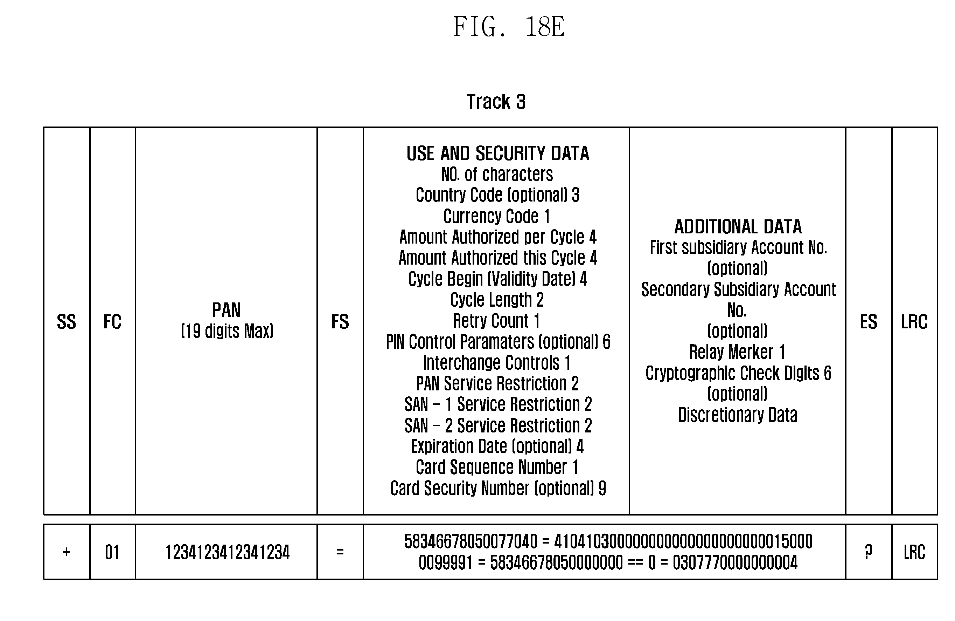

Track 3 may store the bank account information and supplementary information as shown in FIG. 18E.

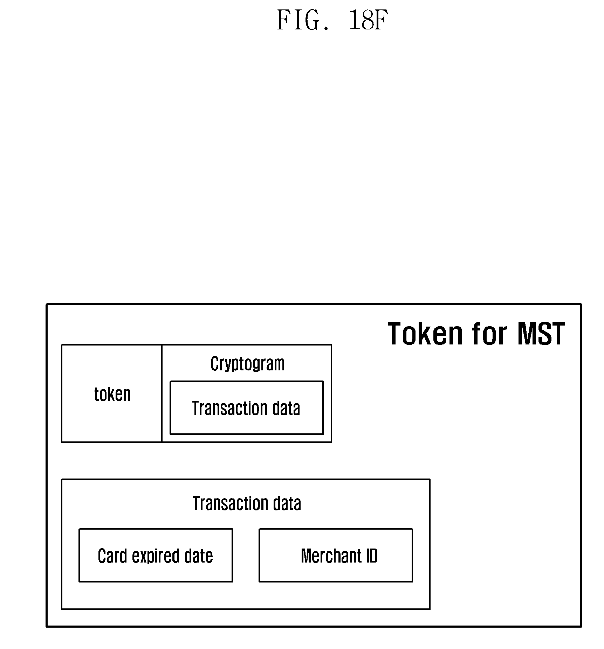

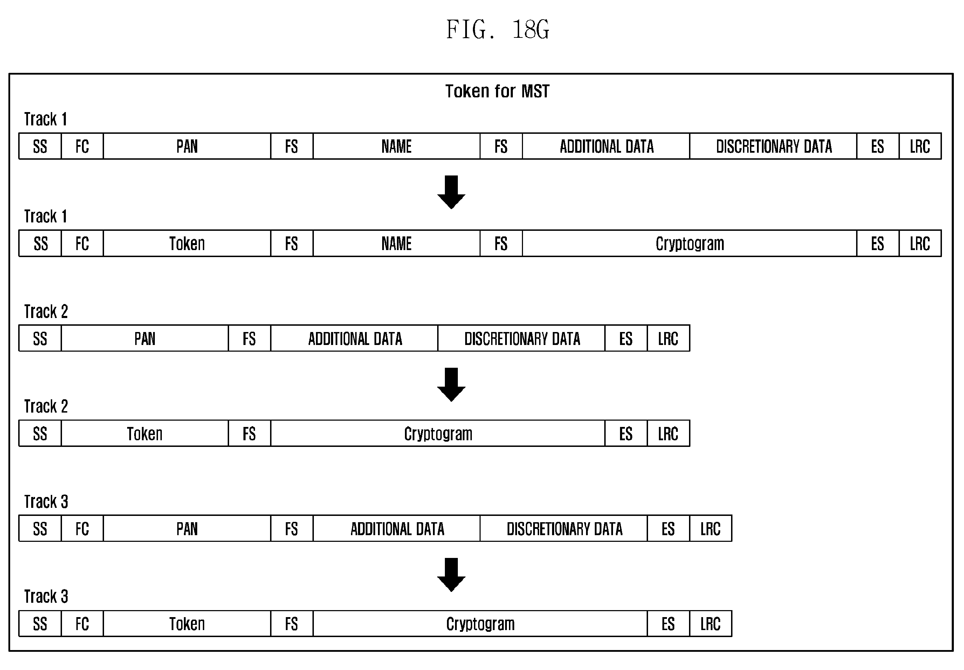

Referring to FIGS. 18F and 18G, the OTC or token for the MST module 226 may include encrypted transaction data. For example, the transaction data may be the information recorded in tracks 1, 2, and 3. According to various embodiments, the transaction data may include card expired data and/or merchant ID.

In the OTC or token for the MST module 226, the PAN may be stored in the form of the token in track 1, and the ADDITIONAL DATA and/or DISCRETIONARY DATA may be the encrypted information (cryptogram).

In the case of track 2, the PAN information may be stored in the form of a token, and the ADDITIONAL DATA and/or DISCRETIONARY DATA may be encrypted information (cryptogram).

In the case of track 3, the PAN information may be stored in the form of a token, and the ADDITIONAL DATA and/or USE AND SECURITY DATA may be encrypted information (cryptogram).

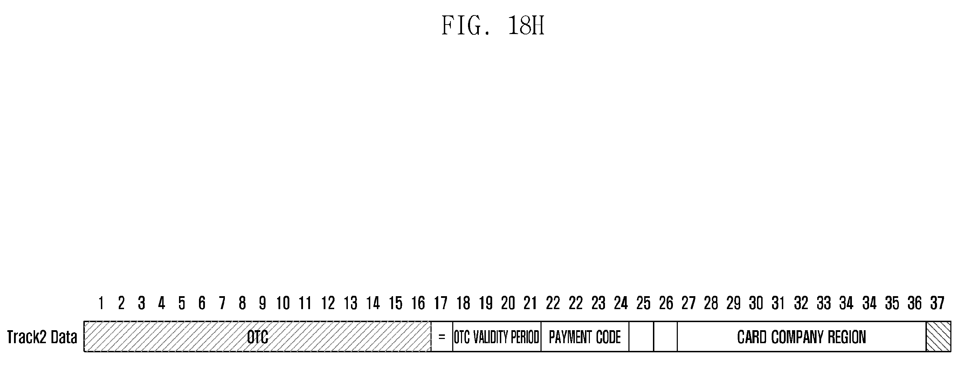

Referring to FIG. 18H, the OTC card according to various embodiments of the present disclosure may include OTC data of 16 or less characters, a field separator of one character (e.g., '='), OTC expiration date of 4 or less characters, a payment code of 3 or less characters, and card company data of 10 or less characters.

In FIG. 18H, the OTC card according to various embodiments of the present disclosure includes at least one of OTC data, a field separator, an OTC expiration date, a payment code, and card company data. The OTC expiration date may be similar to or identical with the expiration date of the card.

As described above, the one-time card issuing method and apparatus of the electronic device according to various embodiments of the present disclosure is advantageous in terms of securing various payment means depending on necessity by issuing a card that can be used only one time.

The term "module" according to the embodiments of the present disclosure, means, but is not limited to, a unit of one of software, hardware, and firmware or any combination thereof. The term "module" may be used interchangeably with the terms "unit," "logic," "logical block," "component," or "circuit." The term "module" may denote a smallest unit of a component or a part thereof. The term "module" may be the smallest unit of performing at least one function or a part thereof. A module may be implemented mechanically or electronically. For example, a module may include at least one of ASIC chip, FPGAs, and programmable-logic device known or to be developed for certain operations. According to various embodiments of the present disclosure, the devices (e.g., modules or their functions) or methods may be implemented by computer program instructions stored in a computer-readable storage medium. In the case that the instructions are executed by at least one processor (e.g., processor 120), the at least one processor may execute the functions corresponding to the instructions. The computer-readable storage medium includes magnetic media such as a floppy disk and a magnetic tape, optical media including a CD ROM and a DVD ROM, a magnetooptical medium such as a floptical disk, and the hardware device designed for storing and executing program commands such as ROM, RAM, and flash memory. The programs commands include the language code executable by computers using the interpreter as well as the machine language codes created by a compiler. The module or programming module of the present disclosure may include at least one of the aforementioned components with omission of some components or addition of other components. The operations of the modules, programming modules, or other components may be executed in series, in parallel, recursively, or heuristically. Also, some operations may be executed in different order, omitted, or extended with other operations.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a sensor;
a communication interface; and
a processor configured to:
acquire location information of the electronic device using the sensor,
transmit a request for payment means information and the location information to a first external device using the communication interface, the payment means information being received by the first external device and generated by the first external device based on the transmitted location information, and
transmit the payment means information to a second external device for use in payment using the communication interface.

2. The electronic device of claim 1, wherein the location information comprises at least one of location information of the electronic device, roaming state information, information on stores around the electronic device, and a place where the payment process is in progress using the electronic device.

3. The electronic device of claim 1, wherein the payment means information is generated based on information related to a payment means stored in the electronic device.

4. The electronic device of claim 1, wherein the processor is further configured to discard, when a message indicating completion of a payment transaction is received from one of the first and second external devices, the payment means information.

5. The electronic device of claim 4, further comprising a memory configured to store the payment means information,
wherein the processor is further configured to delete the payment means information from the memory as at least part of discarding the payment means information.

6. The electronic device of claim 1, wherein the processer is further configured to discard the payment means information, when one of a predetermined period elapses and a predetermined number of times of use is consumed.

7. The electronic device of claim 1, wherein the processor is further configured to:
determine payment means information required according to the location information, and
receive the payment means information from the first external device.

8. The electronic device of claim 7,
wherein the location information comprises at least one of location information of the electronic device, roaming state information, information on stores around the electronic device, and a place where the payment process is in progress using the electronic device, and
wherein the payment means information is generated based on information related to a payment means stored in the electronic device.

9. The electronic device of claim 7, further comprising a memory configured to store the payment means information,
wherein the processor is further configured to:
delete the payment means information from the memory as at least part of discarding the payment means information,
discard, when a message indicating completion of a payment transaction is received from one of the first and second external devices, the payment means information, and
discard the payment means information when one of a predetermined period elapses and a predetermined number of times of use is consumed.

10. A payment information processing method of an electronic device, the payment information processing method comprising:
acquiring location information of the electronic device using a sensor;
transmitting a request for payment means information and the location information using a communication interface;
receiving the payment means information from a first external device, the payment means information being generated by the first external device based on the transmitted location information; and
transmitting the payment means information for use in payment to a second external device using the communication interface.

11. The method of claim 10, wherein the location information comprises at least one of location information of the electronic device, roaming state information, information on stores around the electronic device, and a place where the payment process is in progress using the electronic device.

12. The method of claim 10, wherein the payment means information is generated based on information related to a payment means stored in the electronic device.

13. The method of claim 10, further comprising discarding, when a message indicating completion of a payment transaction is received from one of the first and second external devices, the payment means information.

14. The method of claim 13, wherein the discarding of the payment means information comprises deleting the payment means information in a memory.

15. The method of claim 10, wherein the payment means information is discarded when one of a predetermined period elapses and a predetermined number of times of use is consumed.
